# EUROPÄISCHE PATENTSCHRIFT

(11) **EP 2 652 479 B1**
(45) Veröffentlichungstag und Bekanntmachung des Hinweises auf die Patenterteilung: **15.10.2014**
(21) Anmeldenummer: 11799157.0
(22) Anmeldetag: 14.12.2011
(51) Int. Cl.: G01N 21/03, B01L 3/00, G01N 21/76, G01N 21/77, G01N 21/78, G01N 21/82

(54) **MESSANORDNUNG ZUR QUANTITATIVEN OPTISCHEN AUSWERTUNG EINER CHEMISCHEN REAKTION**
MEASURING ARRANGEMENT FOR QUANTITATIVE OPTICAL EVALUATION OF A CHEMICAL REACTION
SYSTÈME DE MESURE POUR L'ÉVALUATION OPTIQUE QUANTITATIVE D'UNE RÉACTION CHIMIQUE

(30) Priorität: 14.12.2010 AT 20662010
(43) Veröffentlichungstag der Anmeldung: 23.10.2013
(73) Patentinhaber: Greiner Bio-One GmbH, 72636 Frickenhausen (DE)
(72) Erfinder: SONNLEITNER, Max, A-4040 Linz (AT)
(74) Vertreter: Burger, Hannes
(86) Internationale Anmeldenummer: PCT/EP2011/072763
(87) Internationale Veröffentlichungsnummer: WO 2012/080339

(56) Entgegenhaltungen:
- WO-A1-02/08458
- WO-A2-2007/054710
- US-A1- 2002 123 059
- US-A1- 2003 235 924
- US-A1- 2006 063 160

## Beschreibung

Die Erfindung betrifft eine Messanordnung zur quantitativen optischen Auswertung einer chemischen Reaktion.

Bei einer chemischen Reaktion kann es als Reaktionsergebnis zu einem Farbumschlag bzw. zu einer Änderung der Transmission kommen, ferner ist es möglich, dass aufgrund der chemischen Reaktion eine Abgabe elektromagnetischer Strahlung erfolgt. Bei dem hier Anwendung findenden Messverfahren wird eine zu analysierende Probe, die zumeist in flüssiger Form vorliegt, innerhalb einer Mikrofluidik an zumindest einem Testabschnitt vorbei bewegt, wobei es bei Vorhandensein eines Analyts in der Probe und einer entsprechend korrespondierenden Reagenzie im Testabschnitt, zu einer chemischen Reaktion kommen, welche sich in einer Änderung der Transmittanz des Testabschnitts bzw. in der Abgabe elektromagnetischer Strahlung aus dem Testabschnitt äußert.

Zur Auswertung des Reaktionsergebnisses, welches in einem direkten Zusammenhang mit dem quantitativen Vorkommen des Analyts in der Probe steht ist bekannt, den Testabschnitt mit einem fotosensitiven Sensor zu erfassen und das zeitliche Verhalten des erfassten, optischen Signals auszuwerten. Da die auszuwertenden optischen Effekte oftmals nur sehr gering ausfallen, ist es von besonderer Bedeutung, wenn der optische Detektor eine hohe Sensitivität aufweist, um so einen möglichst großes Signal-zu-Rauschverhältnis (SNR) zu erreichen, was wiederum unmittelbar eine möglichst geringe Erfassungsschwelle (LOD) ergibt. Bei bekannten Auswertevorrichtungen wird vor dem Testabschnitt ein Fotodiodenarray angeordnet, wobei ein Testabschnitt von mehreren Fotodetektoren, beispielsweise 5 bis 7 Fotodetektoren, erfasst wird. Dies hat jedoch den Nachteil, dass die auf jeden einzelnen Fotodetektor entfallende elektromagnetische Strahlung reduziert wird und somit das einfallende bzw. erfasste Signal oftmals nur geringfügig größer ist als das unvermeidliche Eigenrauschen des Fotodetektors, wodurch sich somit ein sehr kleines SNR ergibt. Um eine möglichst hohe Auflösung bei einer gleichzeitig sehr geringen Detektionsschwelle zu erreichen, ist es jedenfalls von Nachteil, wenn das Signal eines Testabschnitts auf mehrere Fotodetektoren aufgeteilt wird. Ferner ist es ebenfalls von Nachteil, wenn die optische Reaktion, eine Änderung der Transmittanz bzw. eine Lumineszenz, aufgrund von Streueffekten auf benachbarte, also nicht ursächlich dem relevanten Testabschnitt zugeordneten Fotodetektoren einfällt.

Beispielsweise offenbart das Dokument WO 02/08458 A1 ein Verfahren, zur ortsaufgelösten Detektion von elektromagnetischer Strahlung. Dazu ist offenbart, einen bildgebenden fotoelektrischen Flächensensor in möglichst geringem Abstand zur Oberfläche des Biochips anzuordnen, sodass elektromagnetische Strahlung, die von einem Bereich der Oberfläche des Biochips ausgeht, in eindeutiger Weise einen bestimmten Bereich des Flächensensors zugeordnet werden kann. Dadurch wird erreicht, dass jedem fotoselektiven Element des Flächensensors, ein definierter Bereich des Biosensors zugeordnet ist und somit das entsprechende Element nicht gegen Streulicht von benachbarten Bereichen des Flächensensors abgeschirmt werden muss. Durch Auswerten des optischen Reaktionssignals ermöglicht dies eine eindeutige räumliche Zuordnung der Substanz zu einem Feldelement des Biochips. Durch die unmittelbare räumliche Nähe von Signalerzeugung und Detektion ist ein Verzicht auf jegliche Abbildungsoptik möglich. In einer bevorzugten Ausführungsform wird der Biochip direkt auf der Sensoroberfläche aufgebracht. In einer weiteren Ausführung wird zwischen dem Flächensensor und dem Biochip ein Abstandshalter angeordnet, und dadurch ein Reaktionsraum definiert. Zur Detektion werden typischerweise Flachensensoren mit mehr als 10.000 Pixel verwendet, wobei durch den direkten Kontakt bzw. dem sehr geringen Abstand zwischen Flächensensor und Oberfläche des Biochips, eine Art Kontaktbelichtung erfolgt. Durch die direkte Anordnung auf der Sensorfläche bzw. durch die beabstandete Anordnung zur Bildung eines Reaktionsraums, kommt es zur Kontamination des Flächensensors mit Probenmaterial, sodass der Flächensensor bzw. das gesamte Detektionssystem, in das der Flächensensor integriert ist, nach der Messung gewaschen und getrocknet werden muss, um danach erneut benutzt werden zu können. Ist zwischen dem Flächensensor und dem Biochip ein Reaktionsraum vorgesehen, wird ein räumliches Auflösungsvermögen von 20µm oder besser erreicht. Bei einem direkten Kontakt von Fluchensensor und Biochip entspricht das Auflösungsvermögen der Pixelgröße des Sensors. Der Abstand zwischen der Oberfläche des Biochips und dem Flächensensor ist so gewählt, dass jedes Pixelelement des Sensors im Wesentlichen nur Licht aus unmittelbar gegenüberliegenden Bereichen des Biochips empfängt. Der Abstand zwischen Flächensensor und Biochip sollte daher nicht wesentlich größer als die Kantenlänge eines Pixels des Flächensensors sein.

Aus dem Dokument US 2003/0235924 A1 ist eine Spektroskopische Vorrichtung bekannt, bei der die Optoelektronik und Mikrofluidik integriert ausgebildet sind. Auch diese Vorrichtung kommt ohne Linsensystem zwischen der Mikrofluidik und dem Detektorsystem aus. Die Probenaufnahmevorrichtung ist dabei derart ausgebildet, dass die zu analysierende Probe in einem Abstand bis zum 50-fachen der Pixelabmessung angeordnet ist. Die höchste Auflösung des Detektorsystems wird durch die Pixelgröße bestimmt und beträgt dadurch weniger als 10µm. Beispielsweise kann die aktive Fläche eines Pixels 3µm x 3µm betragen. Die Mikrofluidik kann beispielsweise direkt am Detektorsystem angeordnet sein, mit oder ohne einer Zwischenlage, ferner kann die Mikrofluidik auch in unmittelbarer Nähe angeordnet sein.

Eine Mikroarray-Messsystem mit einer Mikrofluidik ist ferner aus der US 2006/0063160 A1 bekannt. Auch hier erfolgt die Bilderfassung durch ein Hochpixel-CCD-Array.

Das Dokument WO 2007/054710 A2 zeigt eine Durchlicht-Messvorrichtung basierend auf organischen Halbleiterbauelementen. Von einer oLED wird Licht in einen Kanal abgegeben, welches Licht den Kanal durchdringt und von einer, der oLED gegenüberliegend angeordneten Photodiode erfasst wird.

Aus der US 2002/0123059 A1 ist ferner ein Detektionssystem bekannt, welches einen Einweg-Biochip umfasst, der eine Anordnung von abgeschlossenen Testabschnitten und eine Mikrofluidik umfasst.

Ausgehend von des WO 02/08458 A1 liegt die Aufgabe der Erfindung darin eine Messanordnung mit einer alternativen Probenfluidik zu schaffen.

Diese Aufgabe wird durch eine Messanordnung gemäß Anspruch 1 gelöst. Die Messanordnung umfasst einen Probenträger und einen fotosensitiven Sensor, wobei der Abstand zwischen den auf einer Probenlage des Probenträgers angeordneten Testabschnitten und den Fotodetektoren kleiner als 700 µm ist. Der Probenträger weist eine Trägerlage und eine Probenlage auf, wobei ferner die Trägerlage einen Abgabeabschnitt aufweist, der über eine Mikrofluidik mit einem Reservoir verbunden ist. Die Probenlage weist eine Analyseseite und dieser gegenüberliegend, eine Lichtaustrittsseite auf, wobei auf der Analyseseite in einer Längsrichtung der Probenlage von- einander beabstandet, eine Mehrzahl von Testabschnitte angeordnet sind und wobei ferner die Probenlage mit der Analyseseite derart auf der Trägerlage angeordnet ist, dass die Testabschnitte einem Volumen der Mikrofluidik zugewandt sind. Diese Anordnung hat den Vorteil, dass die Testabschnitte mit dem in der Mikrofluidik transportierten Probenmaterial, insbesondere einem flüssigen Probenmaterial, in Kontakt kommen und somit die chemische Reaktion stattfinden kann.

Das Probenmaterial wird dabei im Abgabeabschnitt aufgebracht, über die Mikrofluidik an den Testabschnitten vorbei zu einem Reservoir gebracht. Das Reservoir ist insbesondere groß genug, um die Gesamtmenge der zur Durchführung der Messung erforderlichen Proben bzw. Reagenzien aufzunehmen, insbesondere sicher aufzunehmen, sodass ein Kontakt des Bedieners mit dem Probenmaterial im Wesentlichen nicht möglich ist.

Der fotosensitive Sensor weist eine Mehrzahl von Fotodetektoren auf einem Tragkörper auf, wobei über den Fotodetektoren eine transparente Deckschicht angeordnet ist. Die transparente Deckschicht ist nun derart ausgebildet, dass ein zuverlässiger Schutz der einzelnen Fotodetektoren gewährleistet ist, die Schicht zur Erreichung der erfindungsgemäßen Ausbildung jedoch ausreichend dünn ist und dennoch eine ausreichende Widerstandfähigkeit gegenüber Lösungs-bzw. Reinigungsmitteln aufweist, da insbesondere der fotosensitive Sensor zyklisch gereinigt werden muss, um eine Kontamination des Bedienpersonals mit Probenresten zuverlässig zu verhindern. Die Deckschicht kann beispielsweise als Epoxidharz ausgebildet sein.

Da der Probenträger in einer Aufnahmevorrichtung des Sensors lösbar angeordnet wird, so dass die Lichtaustrittsseite dem fotosensitiven Sensor zugewandt und die Testabschnitte über den Fotodetektoren angeordnet sind, kann der Probenträger, insbesondere ein Einwegprobenträger, leicht in die Messanordnung eingelegt werden, die Messung der chemischen Reaktion durchgeführt und der Probenträger anschließend aus der Messanordnung entnommen und entsorgt werden

Nach einer Weiterbildung ist vorgesehen, dass die Dicke der Deckschicht weniger als 500 µm beträgt. Eine Reduktion der Dicke der Deckschicht auf diesen Wert hat gegenüber den, aus dem Stand der Technik bekannten fotosensitiven Sensoren, bei denen die Dicke zumeist größer 1000µm ist, den Vorteil, dass eine deutliche Annäherung des Testabschnitts an den fotosensitiven Sensor ermöglicht wird, ohne den mechanischen Schutz der einzelnen Fotodetektoren bzw. die elektrische Kontaktierung der Fotodetektoren zu beeinträchtigen.

Zur Lösung der erfindungsgemäßen Aufgabe ist es ferner von Vorteil, wenn die Dicke der Probenlage kleiner als 200 µm beträgt, da somit der Abstand zwischen dem Testabschnitt und dem fotosensitiven Sensor verringert wird, was direkt zu mehr Lichteinfall auf den Fotodetektor bzw. eine geringere Streubreite auswirkt. Die Probenlage ist bspw. gebildet aus Polystyrol, COC (Cyclo-Olefin-Copolymere).

Aufgrund der Untersuchungen die zur erfindungsgemäßen Messanordnung geführt haben, hat sich von Vorteil erwiesen, wenn der fotosensitive Sensor zumindest 32 Fotodetektoren aufweist, da dadurch für Standard Laborprobenträger (1"/3") ein optimales SNR und eine sehr niedrige Erfassungsschwelle erreicht wird, wobei der fotosensitive Sensor durch einen modifizierten Standardbauteil gebildet sein kann. Die Verwendung von Standardbauteilen hat den besonderen Vorteil, dass die Kosten der Messanordnung niedrig gehalten werden können und somit eine hohe Akzeptanz bei Anwendern gefunden werden kann. Mit dieser Ausbildung ist es von Vorteil, wenn ferner ein Testabschnitt eine Abmessung im Bereich von (0,5 - 1,5 mm) x (2 - 4 mm) hat, wobei eine Abmessung von 1 x 2 mm bevorzugt ist.

Zur Lösung der erfindungsgemäßen Aufgabe ist es ferner von Vorteil, wenn der Abstand zwischen zwei benachbarten Fotodetektoren kleiner als 150 µm ist, da dadurch der Anteil an ungenutzter Fläche des fotosensitiven Sensors reduziert wird. Bei einer Transmissionsmessung bzw. bei einer Emissionsmessung sollte möglichst ein durchgehender, fotosensitiver Abschnitt vorhanden sein, um nicht Licht, welches nicht auf eine vom Fotodetektor eingenommene Fläche fällt, für die Auswertung zu verlieren. Je geringer der Abstand zwischen den Fotodetektoren ist, desto mehr Licht fällt auf diese und daher werden auch die erfasste Intensität und damit das SNR gesteigert.

Zur Lösung der Aufgabe der Erfindung ist es von Vorteil, wenn möglichst viel Licht aus Richtung eines Testabschnitts auf einen, dem jeweiligen Testabschnitt zugeordneten fotosensitiven Sensor fällt. Aufgrund der gegebene Intensitätsverteilung, welche zumeist eine Gaußverteilung sein wird, ist es erfindungsgemäß vorgesehen, dass sich zumindest 99,5 % der auf den fotosensitiven Sensor einfallenden elektromagnetischen Strahlung auf maximal drei Fotodetektoren aufteilen. Somit ist sichergestellt, dass der überwiegende Hauptanteil der Lichtintensität auf einen einzelnen Sensor einfällt und nur ein recht geringer Randanteil auf die beiden benachbarten Fotodetektoren einfällt.

Zur Erhöhung der gleichzeitig durchführbaren Messungen ist es von Vorteil, wenn gemäß einer Weiterbildung der fotosensitive Sensor zumindest zwei nebeneinander beabstandet angeordnete Reihen von Fotodetektoren aufweist. Bei einem Probenträger mit einer entsprechend ausgebildeten Mikrofluidik können somit gleichzeitig die doppelte Anzahl an Reaktionsmessungen durchgeführt werden, was einen erhöhten Durchsatz mit sich bringt. Bevorzugt wird insbesondere eine reihen- bzw. streifenartige Ausbildung der Fotodetektoren, da die Mikrofluidik erfindungsgemäß einen Kanal umfasst, der vorteilhafterweise als möglichst geradliniger Kanal gebildet ist, wobei die Testabschnitte und damit auch die Fotodetektoren in Längsrichtung des Kanals angeordnet sind.

Gemäß einer Weiterbildung weist die der über dem Fotodektor angeordnete Kanal der Mikrofluidik eine Länge von 30 - 50mm, eine Breite von 1 - 4mm und eine Höhe von 10-200µm auf, was einerseits den Vorteil hat, dass dieser Kanal bzw. diese Mikrofluidik kosteneffizient durch Spritzgießen der Trägerlage hergestellt werden kann. Andererseits weist dieser Kanal ein sehr geringes Volumen auf, sodass auch der Verbrauch an Probenchemie bzw. Probenmaterial minimiert wird, was wiederum für die Effizienz und die Akzeptanz des Verfahrens von Vorteil ist. Bevorzugt ist eine Ausbildung des Kanals mit einer Länge von 40mm, einer Breite von 2mm und einer Höhe von 100µm.

Von Vorteil ist ferner eine Weiterbildung, nach der sich bei Abgabe einer Probe am Abgabeabschnitt im Kanal ein Druckgradient mit einer daraus resultierenden Kapillarkraft in Richtung des Reservoirs bildet, da dadurch gewährleistet ist, dass eine selbständige Durchleitung der Probe durch den Kanal bzw. die Mikrofluidik gewährleistet ist, also dass insbesondere kein Mittel zur Erzeugung einer Druckdifferenz bzw. einer Strömungsbewegung erforderlich ist. Insbesondere handelt es sich dabei um eine sogenannte konvektionsgetriebene Hybridisierung, bei der sich im Kanal Konvektionsgradienten ausbilden, die neben der Durchleitung der Probe durch den Kanal, auch noch eine Lenkung des Probenmaterials hin zu den Testabschnitten gewährleisten.

Nach einer Weiterbildung weist die Deckschicht des Fotodetektors im spektralen Bereich von 400 - 600nm ein Transparenzmaximum auf. Die Deckschicht ist bevorzugt durch ein Epoxidharz gebildet, welches durch Additive, insbesondere durch bekannte Farbstoffe für Kunststoffe, in seinen spektralen Eigenschaften dahingehend beeinflusst wurde, nur in dem, für Chemilumineszenz-Messungen bevorzugen Spektralbereich, ein Transparenzmaximum aufweist. Dadurch wird erreicht, dass nicht von einer Chemilumineszenten Reaktion herrührendes Licht die Deckschicht nicht passiert bzw. nur stark gedämpft passiert und somit keinen oder nur einen sehr geringen störenden Einfluss auf das Messergebnis hat. In einer Weiterbildung kann das Transparenzmaximum durch Additive aber auch in einen anderen Wellenlängenbereich gelegt werden, um so bspw. für Transmissionsmessungen optimiert werden.

Durch Ungenauigkeiten bei der Herstellung des Probenträgers, insbesondere durch geringfügige Abweichung bei der Positionierung, insbesondere beim Aufdrucken der Testabschnitte, sowie durch geringfügige Abweichungen bei der Anordnung des Probenträgers in der Aufnahmevorrichtung, kann es vorkommen, dass ein Testabschnitt nicht genau über einem korrespondieren Fotodetektor angeordnet ist. Ist nun gemäß einer Weiterbildung der Mittenabstand zwischen zwei benachbarten Testabschnitten größer oder gleich dem 3-fachen Mittenabstand der Fotodetektoren, hat das den Vorteil, dass es trotz einer nicht exakten Ausrichtung zu keiner Beeinflussung des Erfassungsergebnisses kommt, insbesondere dass es im Wesentlichen zu keiner negativen Auswirkung auf das Signal-zu-Rauschverhältnis kommt und somit die Messempfindlichkeit nicht beeinträchtigt wird. Da ferner das vom Testabschnitt ausgehende Licht eine im Wesentlichen Gauß-förmige Intensitätsverteilung aufweist, kann somit auch bei einer ungenauen Positionierung auf das Intensitätsmaximum des einfallenden Lichts geschlossen werden, bspw. mittels einer Interpolation unter Berücksichtigung der GaußVerteilung, wodurch mehr Signalanteile in die Auswertung einfließen, was wiederum für das Signal-zu-Rauschverhältnis von Vorteil ist. Insbesondere erhält man bei der erfindungsgemäßen Ausbildung der Messanordnung und dem anspruchsgemäßen Abstand von 3 mm eine Positionierungenauigkeit von +/- 0,45 mm, bei einem Abstand von 4 mm würde man eine Positionierungenauigkeit von +/- 0,9 mmm erhalten. Somit ist die erfindungsgemäße Messanordnung für den täglichen Einsatz besonders geeignet, da mögliche Positionierungsfehler durch die weiterbildungsgemäße Weiterbildung weitestgehend eliminiert werden können.

Die Lösung der erfindungsgemäßen Aufgabe kann auch dadurch erreicht werden, dass mehr Licht auf den fotosensitiven Sensor einfällt, sodass gemäß einer Weiterbildung die, dem fotosensitiven Sensor gegenüberliegend angeordnete Begrenzungsfläche des Kanals, optisch reflektierend ausgebildet ist. Diese Reflexion kann beispielsweise durch eine Verspiegelung der Begrenzungsfläche erreicht werden. Es ist jedoch auch möglich, einen Schichtaufbau aufzubringen, sodass es zu einem Brechungsindexsprung kommt und einfallendes Licht zurück auf den fotosensitiven Sensors gelenkt wird. Für Transmissionsmessungen kann beispielsweise vorgesehen sein, die seitlichen Begrenzungswände des Kanals reflektierend auszubilden, um so eine Lichtlenkung auf das Probenmaterial unter Vermeidung von Steuerlichteinfall auf den fotosensitiven Sensor zu gewährleisten. Es ist jedoch auch möglich, dass die Trägerlage optisch reflektierend ausgebildet ist, bspw. indem diese aus einem weißen Material gebildet ist, welches im Gegensatz zu einem transparenten Material das eintreffende Licht zum Großteil zurück reflektiert.

Eine Weiterbildung nach der der Kanal einen zum fotosensitiven Sensor ausgerichteten konkaven Querschnitt aufweist, hat den Vorteil, dass ein konkaver Querschnitt als Sammellinse bzw. Sammelspiegel fungiert und somit Licht, welches den Testabschnitt in, die dem fotosensitiven Sensor entgegengesetzte Richtung verlässt, zurückgeworfen und insbesondere auf den fotosensitiven Sensor fokussiert wird. Die konkave Fläche kann daher bevorzugt reflektierend bzw. mit einem Brechungsindexbelag ausgebildet sein. Es ist aber auch möglich, dass der Kanal in Längsrichtung abschnittsweise ein konkaves Profil aufweist. Beide möglichen Ausbildungen haben den Vorteil, dass mehr Streulicht auf den fotosensitiven Sensor gelenkt wird und somit für die Erfassung zur Verfügung steht.

Eine weitere Möglichkeit zur Erhöhung der Lichtintensität auf den fotosensitiven Sensor besteht darin, dass die Lichtaustrittsseite zumindest abschnittsweise eine Lichtlenkstruktur aufweist, welche beispielsweise als Prägestruktur mit einem Sägezahn- oder Dreieckprofil ausgebildet sein kann. Diese Lichtlenkstruktur soll verhindern, dass Licht, welches den Testabschnitt passiert hat bzw. von diesem ausgeht, in benachbarte Raumabschnitte gestreut wird und somit für die Intensitätsmessung am zugeordneten Fotodetektor verloren geht, in dem derartige Lichtstrahlen zurück in Richtung des zugeordneten Fotodetektors geleitet werden. Eine Prägestruktur hat ferner den Vorteil, dass es beim Übergang von dem Probenträger, insbesondere von der Probenlage, auf den unvermeidlichen Luftspalt zwischen dem Probenträger und dem fotosensitiven Sensor, aufgrund der unterschiedlichen Brechungsindizes gegebenenfalls zu einer Totalreflexion in der Deckschicht des fotosensitiven Sensors und somit parallel zu den Fotodetektoren kommen kann. Durch die Prägestruktur lassen sich die Winkelverhältnisse beim Übergang vom Probenträger zum Sensor positiv beeinflussen, um somit die Gefahr der Totalreflexion möglichst zu verringern.

Eine Weiterbildung besteht auch darin, dass die Probenlage als optische Faserplatte ausgebildet ist. Eine derartige Lichtleitfaserplatte ist dadurch gebildet, dass eine Vielzahl von Lichtleitfasern dicht aneinander angeordnet ist, wobei die stirnseitigen Enden der Lichtleitfasern die Analyseseite bzw. Lichtaustrittsseite bilden. Der Zwischenraum zwischen den einzelnen Fasern kann beispielsweise durch ein transparent aushärtendes Harz gebildet sein. Somit wird Licht, welches vom Testabschnitt ausgeht bzw. diesen passiert, von Lichtleitfasern übernommen und zielgerichtet auf den Fotodetektor gelenkt, wobei somit auch eine Erfassung und richtungsweisende Lenkung von Streulicht möglich ist. Es ist ferner möglich, dass die Enden der Lichtleitfasern als Mikrooptik ausgebildet sind, um somit eine verbesserte Sammelwirkung bzw. verbesserte Fokussierung und damit wiederum eine Erhöhung der auf den Fotodetektor gelenkten Lichtintensität. Beim Übergang vom Luftspalt in die Deckschicht kann es zu einer Totalreflexion in der Deckschicht kommen, wodurch das einfallende Licht für die Detektion verloren geht. Daher kann auch die Deckschicht als eine derartige Faserplatte ausgebildet sein und eine gezielte Lenkung des einfallenden Lichts auf die Fotodetektoren gewährleistet.

Beim Übergang vom Probenträger auf den fotosensitiven Sensor wird zumeist ein geringer Luftspalt bestehen, wobei vom Übergang vom Probenträger auf den Luftspalt und vom Luftspalt auf den fotosensitiven Sensor, ein Sprung im Brechungsindex besteht, wodurch es gegebenenfalls zu einer Totalreflexion und dadurch zu einem Verlust der reflektierten Lichtstrahlen kommt. Gemäß einer Weiterbildung ist vorgesehen, dass die Probenlage in Richtung ihrer Dicke zumindest abschnittsweise ein Brechungsindex-Stufenprofil aufweist, wobei dieses Profil derart ausgebildet ist, dass der Brechungsindexunterschied zwischen der Lichtaustrittsseite der Probenlage und dem Luftspalt möglichst klein ist, um so möglichst wenig Licht durch Totalreflexion an dieser Grenzfläche zu verlieren und möglichst viel Licht in Richtung des fotosensitiven Sensors zu lenken. Das Stufenindexprofil in Richtung der Dicke der Probenlage wird ähnlich ausgebildet sein, also eine Mehrzahl kleiner Brechungsindexunterschiede aufweisen um so möglichst viel Licht vom Testabschnitt zur Lichtaustrittsseite zu lenken. Das Brechungsindex-Stufenprofil kann beispielsweise dadurch gebildet sein, dass die Probenlage durch eine Mehrzahl dicht aneinander angeordneter Lagen eines Materials mit jeweils einem spezifischen Brechungsindex gebildet sein, welcher sich von Lage zu Lage geringfügig ändert. Ferner ist möglich, dass mehrere Lagen mit jeweils einem spezifischen Brechungsindex aus der Dampfphase aufgebracht werden, um somit das Stufenprofil zu bilden.

In dieselbe Richtung geht eine Weiterbildung nach der die Probenlage in Richtung ihrer Dicke zumindest abschnittsweise ein Brechungsindex-Gradientenprofil aufweist. Ein Gradientenprofil bietet eine stufenlose Anpassung des Brechungsindex von der Probenlage an die Luft im Luftspalt und bietet somit eine besonders optimale Lenkung des Lichts vom Testabschnitt zum fotosensitiven Sensor. Ein Gradientenprofil wird bevorzugt aus der Dampfphase gebildet, sodass ein stetiger Verlauf des Brechungsindex entsteht. Da der Aufwand zur Herstellung eines spezifischen Brechungsindexprofils recht hoch ist, ist vorgesehen, dass ein derartiges Brechungsindexprofil zumindest in dem Abschnitt der Probenlange angeordnet ist, in dem sich auch die aufgebrachten Testabschnitte befinden.

Eine weitere Möglichkeit zur Verhinderung eines Brechungsindexsprungs besteht darin, dass auf der Lichtaustrittsseite der Probenlage oder auf der Deckschicht des fotosensitiven Sensors eine Immersionsschicht aufgebracht ist, wobei durch diese Schicht die Luft aus dem Spalt zwischen Probenlage und Sensor verdrängt wird und somit ein Brechungsindexsprung zur Luft bzw. von der Luft auf die Deckschicht verhindert wird. Die Immersionsschicht kann beispielsweise als Immersionsöl aufgebracht werden, wie dies aus der Mikroskopie bekannt ist. Ferner ist es möglich, dass beispielsweise auf der Lichtaustrittsseite ein Depot vorgesehen ist, welches beim Einlegen des Probenträgers in die Aufnahmevorrichtung aktiviert wird und somit das Immersionsmaterial auf der Lichtaustrittsseite aufbringt. Diese Weiterbildung hat den Vorteil, dass keine zusätzlichen Bedienhandlungen erforderlich sind, was insbesondere für den Feldeinsatz bzw. für die Einmalverwendung von Bedeutung ist.

Bei der Durchführung der Probenanalyse ist es zumeist erforderlich, das Messergebnis zu dokumentieren. Daher ist es von Vorteil, wenn am Probenträger ein Identitäts- bzw. Identifikationsmerkmal angeordnet ist, da somit eine direkte Zuordnung des ausgelesenen Signalverlaufs der einzelnen Testabschnitte in ein Messprotokoll übernommen werden kann. Ferner können unterschiedliche Probenträger mit unterschiedlichen Testabschnitten eingesetzt werden, so dass im Identifikationsmerkmal bspw. auch eine Kennung bzw. Konfigurationsdaten der Testabschnitte hinterlegt sein können. Das Merkmal ist bevorzugt kontaktlos auslesbar und kann bspw. durch einen 1D- oder 2D-Code gebildet sein, es ist jedoch auch eine Ausbildung als RFID-Merkmal möglich.

Für die Modularisierung der erfindungsgemäßen Messanordnung ist eine Weiterbildung möglich, nach der auf der Analyseseite und/oder auf der der Analyseseite zugewandten Seite der Trägerlage sogenannte Energierichtungsgeber aufgebracht sind, welche mittels Ultraschallschweißung eine Verbindung der Probenlage mit dem Probenträger ermöglichen. Dadurch ist es möglich, die Trägerlage und Probenlage getrennt voneinander herzustellen, insbesondere eine universelle Trägerlage bereitzustellen, die mit einer Mehrzahl spezifisch ausgebildeter Probenlagen, insbesondere mit spezifischen Testabschnitten, zur erfindungsgemäßen Messanordnung zusammengefügt wird.

Da die vom Testabschnitt ausgehende Strahlung weitestgehend ungerichtet ist, ist für eine Fluoreszenz-Messung eine Weiterbildung von Vorteil, nach der die Probenlage und/oder die Trägerlage als optischer Polarisator ausgebildet sind. Ist das auf den Testabschnitt einfallende Licht polarisiert, kann durch eine dazu orthogonale Polarisationsrichtung der Probenlage das einfallende Licht ausgeblendet werden, so dass nur das vom Testabschnitt ausgehende Licht auf den Fotodetektor einfallen wird. Eine Polarisationsanordnung besteht aus zwei polarisierenden Komponenten, die unter den Begriffen Polarisator und Analysator bekannt sind. Nach der erfindungsgemäßen Weiterbildung bildet die Probenlage den Analysator. Der Polarisator kann durch die Trägerlage gebildet sein, ferner ist möglich, dass eine Beleuchtungsvorrichtung vorhanden ist die einen Polarisator aufweist, mit welcher die einzelnen Testabschnitte beleuchtet werden. Durch eine weitest gehende Ausblendung des einfallenden Anregungslichts lassen sich auch sehr geringe Reaktionsprodukte eindeutig auslesen, was wiederum das LOD senkt.

Die Aufgabe der Erfindung wird auch durch ein Messgerät zur optischen Auswertung einer chemischen Reaktion gelöst, welches Messgerät eine erfindungsgemäße Messanordnung aufweist, wobei der Sensor in einem Grundkörper angeordnet ist und eine Abdeckkappe zwischen einer Messposition und einer Zuführ- und Entnahmeposition verschwenkbar ist. Da die Lichtintensitäten sowohl Chemilumineszenzmessungen, als auch bei Transmissionsmessungen sehr gering sind, ist es von Bedeutung, wenn die Abdeckkappe in der Messposition den Probenträger und einen Abschnitt des Grundkörpers lichtdicht gegen die Umgebung lichtdicht abschließt, da somit gewährleitstet ist, dass kein Fremdlicht die Messung beeinflussen kann. Diese Abdichtung kann bspw. durch einen nutförmigen Kontaktabschnitt zwischen Grundkörper und Abdeckkappe gebildet sein. Ferner kann eine, den abzuschließenden Bereich umlaufende, elastische Dichtung vorgesehen sein, die in der Messposition von der Abdeckkappe gegen den Grundkörper gedrückt wird und somit den lichtdichten Abschluss gewährleistet.

Bei Transmissionsmessungen wird die durch die chemische Reaktion hervorgerufene Abschwächung des den Testabschnitt passierenden Lichtes erfasst, sodass gemäß einer Weiterbildung in der Abdeckkappe eine Beleuchtungsvorrichtung vorhanden ist, die ihr Licht in Richtung der Testabschnitte lenkt. Die Beleuchtungsvorrichtung kann bspw. durch einen Lumineszenzstrahler und/oder eine LED-Anordnung gebildet sein. Auch ist es von Vorteil, wenn die Position der Lichtabgabe entlang des Testabschnitts gezielt beeinflusst werden kann. Wird bspw. ein spezifisches Lichtmuster abgegeben, ist es möglich eine Kalibrierung des fotosensitiven Sensors durchzuführen, wobei Verunreinigungen durch die dadurch verursachte Störung der erwarteten Helligkeitsverteilung erfasst werden können. Bevorzugt ist eine Ausbildung mit vier Leuchtdioden die derart angeordnet sind, dass die gesamte Längserstreckung des fotosensitiven Sensors beleuchtet werden kann.

Zur Erweiterung des Einsatzgebietes des erfindungsgemäßen Messgerätes bzw. zur Anpassung an unterschiedliche Testabschnitte ist es von Vorteil, wenn die Beleuchtungsvorrichtung selektiv steuerbar Licht in mehreren Wellenlängen abgeben kann. Dazu kann die Beleuchtungsvorrichtung mehrere Leuchtmittel aufweisen, die jeweils in einem unterschiedlichen Spektralbereich Licht abgegeben, bzw. kann das Leuchtmittel durchstimmbar ausgebildet sein und somit Licht in einem spezifischen Spektralbereich abgeben. Ebenfalls von Vorteil ist, wenn die Beleuchtungsvorrichtung derart ausgebildet ist, dass Licht entlang der Längserstreckung des fotosensitiven Sensors an mehreren Positionen abgegeben werden kann, bspw. in dem mehrere diskrete Beleuchtungsmittel vorhanden sind, Somit kann ein spezifisches Beleuchtungsmuster bzw. eine spezifische Intensitätsverteilung am Fotodetektor geschaffen werden.

Für Fluoreszenzmessungen ist ferner eine Weiterbildung von Vorteil, nach der die Beleuchtungsvorrichtung einen Polarisator aufweist, wobei bevorzugt die Probenlage als Analysator ausgebildet ist. Die Polarisationsrichtung des Polarisators und des Analysators sind normal zueinander ausgerichtet, was den Vorteil hat, dass das polarisierte anregende Licht der Beleuchtungsquelle von den Fotodetektoren nicht erfasst wird, das unpolarisierte Fluoreszenzlicht den Analysator hingegen passiert und somit von den Fotodetektoren erfasst wird.

Da zur Durchführung der Messung die Abgabe verschiedener Reagenzien erforderlich sein kann, ist gemäß einer Weiterbildung in der Abdeckkappe oder im Grundkörper eine Abgabevorrichtung für Reagenzien angeordnet. In dieser Abgabevorrichtung können in Behältnissen ein oder mehrere Reagenzien angeordnet sein, welche zusammen, selektiv bzw. vor der zu analysierenden Probe auf den Probenträger aufgebracht werden und bei Durchführung der Messung verbraucht werden.

Nach einer Weiterbildung weist die Abgabevorrichtung ein Betätigungselement und ein Depot für Reagenzien auf, wobei das Depot bevorzugt koppelbar ausgebildet ist. Das Betätigungselement kann bspw. durch einen Druckknopf oder eine Perforationsvorrichtung gebildet sein und somit eine wahlfreie Menge des Depotinhalts bzw. den vorgesehenen Inhalt freisetzt. Ein koppelbares Depot hat den Vorteil, dass dadurch ein Einwegsystem gebildet werden kann, wonach der Probenträger und das Depot für die Durchführung der Messung ausgewählt und nach der Durchführung entsorgt werden. Dies ist insbesondere für die Anwendungssicherheit von Vorteil, da der Bediener jederzeit sichergehen kann, die richtigen Reagenzien zu verwenden und nicht wie bislang üblich, mit voluminösen Vorratsbehältern für die erforderlichen Reagenzien hantieren muss, wobei immer wieder die Möglichkeit einer Kontamination bestand. Die Kopplungsvorrichtung kann bspw. durch eine Membran-Nadel-Kombination gebildet sein, wobei die Membran ein Behältnis der Probenabgabevorrichtung dicht abschließt und bei Einlegen von einer Hohlnadel bzw. einem Dorn durchstochen wird, um so die im Behältnis vorhandene Probenchemie bereitzustellen. Insbesondere kann die Probenabgabevorrichtung derart ausgebildet sein, dass eine mehrfache Kopplung möglich ist. Eine Membran würde nach Entfernen der Nadel den Zugang selbsttätig verschließen. Es ist jedoch möglich, dass eine federvorgespannte Verschlusskappe durch einen Entnahmedorn eingedrückt wird und so den Zugang zur Probenchemie ermöglicht.

In einer Weiterbildung kann das Depot durch einen Blister gebildet sein, bei dem in jeweils abgeschlossenen Kammern Reagenzien vorhanden sind. Die Kammer ist mit einer Versiegelung versehen, die durch die Betätigungsvorrichtung zerstört wird, wodurch der Inhalt der Kammer freigesetzt wird. Es ist auch möglich, dass die Betätigungsvorrichtung ein Antriebsmittel aufweist, welches mit dem Steuerungsmodul wirkverbunden ist, bspw. kann dies durch einen elektromagnetisch oder elektromechanisch betätigten Stempel gebildet sein, welcher bei Aktivierung den Inhalt des Depots freisetzt. Ferner ist von Vorteil, wenn der Blister durch die Betätigungsvorrichtung selbsttätig bewegt wird bspw. mittels eines Schrittmotors, um automatisch die jeweils nächste benötigte Reagenz zur Freigabe auszuwählen. Somit lässt sich wiederum eine Einhaltung einer geforderten Reagenziengabe gewährleisten.

Um die Einhaltung der Reihenfolge der Probenabgabe zu gewährleisten kann vorgesehen sein, dass die jedem Depot ein Betätigungselement zugeordnet ist, wobei die Betätigungselemente mit einer Ablaufkennung versehen sind. Dies kann beispielsweise durch eine farbliche Kennzeichnung im Sinn eines Ampelsystems vorgesehen sein, im Hinblick auf eine Einweg-Probenabgabevorrichtung kann auch eine mechanische Ver- bzw. Entriegelungsvorrichtung vorgesehen sein, sodass der Bediener die Reagenzien jedenfalls in der richtigen Reihenfolge abgeben muss.

Für die Anwendungssicherheit ist ferner von Vorteil, wenn das Steuerungsmodul mit einer Auslassvorrichtung der Probenabgabevorrichtung wirkverbunden ist, da somit eine gezielte Abgabe der Probenchemie auf den Probenträger, insbesondere auf den Abgabeabschnitt bzw. gegebenenfalls in die Mikofluidik möglich ist. Da bei der Durchführung der Messung gegebenenfalls auch Ablaufzeiten einzuhalten sind, kann das Steuerungsmodul auch derart ausgebildet sein, dass in einer spezifischen, zeitlichen Abfolge die Probenchemie aus der Probenabgabevorrichtung in den Abgabeabschnitt des Probenträgers abgegeben wird. Die Auslassvorrichtung kann durch ein steuerbares Ventil, bspw. ein Magnetventil, oder eine impulsgesteuerte Abgabevorrichtung ähnlich der eines Tintenstrahldruckers gebildet sein, in einer Weiterbildung kann auch der Durchfluss durch die Auslassvorrichtung gezielt eingestellt werden bspw. durch eine im Durchmesser veränderbare Abgabeöffnung.

Die vorherigen Weiterbildungen haben insbesondere den Vorteil, dass die Bediensicherheit erhöht wird, indem eine Reihenfolge bzw. auch eine zeitliche Reihenfolge sicher eingehalten wird, wobei insbesondere vorgesehen ist, dass diese Abgabe bei geschlossener Abdeckkappe erfolgen kann, also dass der lichtdichte Abschluss des Probenträgers auch bei der Zugabe des Probenchemie gewährleistet ist. Die Abdeckkappe bzw. das Messgerät kann dazu von außen erreichbare Betätigungselemente aufweisen, um die Probenabgabevorrichtung entsprechend bedienen zu können.

In einer Weiterbildung kann vorgesehen sein, dass das Depot unter dem Betätigungselement verschwenkbar angeordnet ist. Beispielsweise kann das Depot ein kreisförmiger Blister sein, der in die Abgabevorrichtung eingelegt wird und schrittweise verschwenkt wird, so dass jedenfalls die erforderliche Reihenfolge der Reagenzienabgabe eingehalten wird. Dazu kann die Abgabevorrichtung bzw. das Depot eine richtungsgebende Struktur aufweisen, die einen Startpunkt und die Drehrichtung vorgibt. Dies kann bspw. durch eine Startnoppe und eine sägezahnartige Struktur gebildet sein. Es ist auch eine streifenförmige Ausbildung des Depots möglich, wobei auch hier eine Startposition und die Fortschreitrichtung festlegbar sind.

Nach Einlegen des Probenträgers in die Aufnahmevorrichtung kann beispielsweise die Mikrofluidik mit einer vorbereitenden Probenchemie gefüllt werden, um die Testabschnitte auf die nachfolgende Messung vorzubereiten. Dazu ist es von Vorteil, wenn der Probenträger bereits in der Aufnahmevorrichtung eingelegt ist und insbesondere die Abdeckkappe geschlossen ist, sodass gemäß einer Weiterbildung die Abdeckkappe einen Zuführabschnitt aufweist, welcher den Abgabeabschnitt des Probenträgers kontaktiert. Dadurch ist es möglich die Probenchemie bzw. die zu analysierende Probe von außen zuzuführen, ohne am eingelegten Probenträger hantieren zu müssen. Da die chemische Reaktion recht rasch nach Zugabe der zu analysierenden Probe erfolgen kann, ist es von Bedeutung, wenn nach der Probenabgabe der Probenträger lichtdicht abgeschlossen ist, wobei bei Abgabe auf den Probenträger bei geöffneter Abdeckkappe hier stets eine Fehlbediengefahr besteht, dass die Probe abgegeben wird und die Kappe nicht rechtzeitig geschlossen wird, sodass es zu einer Fehlmessung kommen kann. Im Hinblick auf eine Einwegverwendung kann auch der Zuführabschnitt als Einwegvorrichtung ausgebildet sein und nach Durchführung der Messung zusammen mit dem Probenträger entsorgt werden.

Da am Probenträger ein Identifikations- bzw. Identitätsmerkmal angeordnet sein kann, ist gemäß einer Weiterbildung am Messgerät eine kontaktlos wirkende Auslesevorrichtung vorhanden. Diese Auslesevorrichtung kann bspw. durch einen optischen 1D- bzw- 2D-Erfassungssensor bzw. eine RFID-Sende- und Empfangseinheit gebildet sein.

Um die Dicke des Luftspalts zu verringern und dadurch eine bessere Ankopplung des Probenträgers an den fotosensitiven Sensor zu gewährleisten ist gemäß einer Weiterbildung vorgesehen, dass in der Abdeckkappe ein Druckmittel zur Ausübung einer Kraft auf den Probenträger angeordnet ist. Dies kann beispielsweise durch ein elastisches Material gebildet sein, welches eine Kraft auf die Trägerlage ausübt und somit die Probenlage auf die Deckschicht des fotosensitiven Sensors drückt. Das elastische Material kann beispielsweise durch ein Schaummaterial oder durch ein federbetätigtes Vorspannungselement gebildet sein.

Zum besseren Verständnis der Erfindung wird diese anhand der nachfolgenden Figuren näher erläutert.

Es zeigen jeweils in stark schematisch vereinfachter Darstellung:
- Fig. 1: Eine Schnittdarstellung der erfindungsgemäßen Messanordnung;
- Fig. 2: a) Eine Darstellung der Signalverteilung eines Testabschnitts auf dem fotosensitiven Sensor;
b) Die gemessene Abhängigkeit der Signalbreite auf dem fotosensitiven Sensor, in Abhängigkeit vom Abstand zwischen Testabschnitt und Fotodetektor;
- Fig. 3: Die Anzahl der beleuchteten Fotodetektoren in Abhängigkeit vom Abstand zwischen Testabschnitt und Fotodetektor;
- Fig. 4: Eine Darstellung der Intensitätsverteilung auf die Fotodetektoren in Abhängigkeit vom Mittenabstand der Testabschnitte;
- Fig. 5: Eine Explosionsdarstellung der erfindungsgemäßen Messanordnung;
- Fig. 6: a) Eine Darstellung einer Ausbildung des erfindungsgemäßen Messgeräts;
b) und c) Eine weitere mögliche Ausbildung des erfindungsgemäßen Messgeräts.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

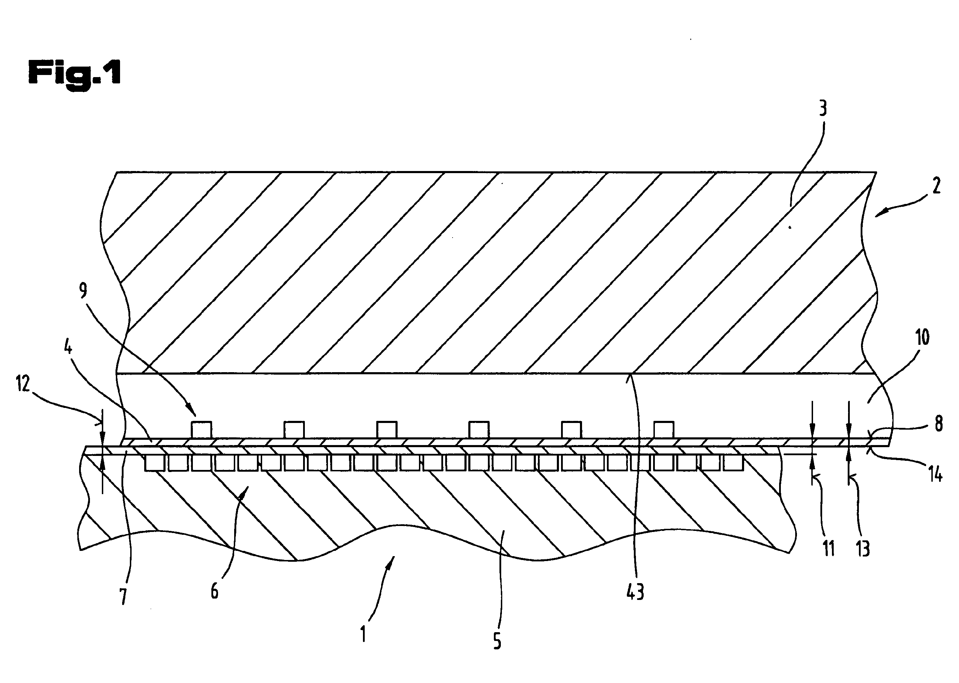

Fig. 1 zeigt eine Schnittdarstellung der erfindungsgemäßen Messanordnung, wobei die Größenordnungen zur Darstellung der erfindungswesentlichen Merkmale unmaßstäblich geändert wurden. Insbesondere werden Schichtdicken bzw. geometrische Ausbildungen unmaßstäblich dargestellt.

Die erfindungsgemäße Messanordnung 1 weist einen Probenträger 2 mit einer Trägerlage 3 und einer Probenlage 4 auf. Ferner ist ein photosensitiver Sensor 5 vorhanden, welcher eine Mehrzahl von Fotodetektoren 6 aufweist, über welchen eine transparente Deckschicht 7 angeordnet ist. Auf einer Analyseseite 8 der Probenlage 4 ist voneinander beabstandet eine Mehrzahl von Testabschnitten 9 angeordnet, wobei die Probenlage 4 mit der Analyseseite 8 derart auf der Trägerlage 3 angeordnet ist, dass die Testabschnitte 9 einem Volumen der Mikrofluidik 10 zugewandt sind, insbesondere sind diese im Kanal 23 angeordnet.

Durch die Reaktion des in der Mikrofluidik 10 transportierten Probenmaterials mit den Reagenzien im jeweiligen Testabschnitt 9 kommt es in den Testabschnitten 9 zu einer Änderung der optischen Eigenschaft bzw. zu einer auf Chemilumineszenz basierenden Lichtabgabe, sodass die, dem jeweiligen Testabschnitt zugeordneten Fotodetektoren, eine Änderung der einfallenden Lichtintensität erfassen werden. Der Vorteil der Erfindung liegt nun darin, dass der Abstand 11 zwischen den Testabschnitten 9 und den Fotodetektoren 6 kleiner als 700 µm ist. Erfindungsgemäß wird dies bspw. dadurch erreicht, dass die Dicke 12 der Deckschicht 7 kleiner als 500 µm ist und dass ferner die Dicke 13 der Probenlage 4 kleiner als 200 µm ist.

Beim Übergang von der Lichtaustrittsseite 14 der Probenlage 4 auf die Deckschicht 7 des fotosensitiven Sensors 5 kann es zu Brechungs- und Streueffekten kommen, was den Effekt hat, dass die Abstrahlcharakteristik des vom Testabschnitt ausgehende Lichts, quasi der einer Punktlichtquelle entspricht. Daher wird das Licht eines Testabschnitts 9 nicht nur auf einen direkt darunter angeordneten Fotodetektor 6 fallen, sondern es wird zu einer Aufweitung kommen, wodurch auch auf den dem zugeordneten Fotodetektor benachbarten Fotodetektoren ein Strahlungsanteil eintreffen wird. Durch die erfindungsgemäße Ausbildung des Abstands 11 zwischen den Testabschnitten 9 und den Fotodetektoren 6 ist jedoch gewährleistet, dass der Hauptteil der Strahlungsintensität lediglich auf einen Fotodetektor eintrifft, der überwiegende Anteil der Strahlungsintensität auf maximal drei Fotodetektoren einfällt.

Da die zu erfassenden Helligkeitssignale oftmals nur sehr gering ausfallen und somit gegebenenfalls vom unvermeidlichen Eigenrauschen jedes einzelnen Fotodetektors überdeckt werden können, ist es von besonderer Bedeutung, dass ein möglichst großer Anteil der von einem Testabschnitt ausgehenden Strahlungsintensität auf einen einzelnen Fotodetektor fällt bzw. dass die insgesamt ausgehende Strahlungsintensität auf eine möglichst geringe Anzahl von Fotodetektoren beschränkt bleibt. Nur so lässt sich ein möglichst großes Signal-zu-Rauschverhältnis bzw. ein geringer unterer Erfassungsgrenzwert erreichen. Die die Trägerlage 3 zumeist transparent ausgebildet ist, kann bspw. die den Testabschnitten 9 gegenüberliegende Begrenzungsfläche des Kanals 23 optisch reflektierend ausgebildet sein. Es ist jedoch auch möglich, dass die Trägerlage 3 selbst optisch reflektierend ausgebildet ist.

Im Zuge von Untersuchungen, die zur Erfindung führten, wurde festgestellt, dass die Signalverteilung bzw. die Signalbreite auf dem fotosensitiven Sensor darüber Aufschluss gibt, wie viele Streifen man auf einem fotosensitiven Sensor mit einem dynamischen Bereich von >100, also einem Übersprechen kleiner 1%, detektieren kann. Der wichtigste Parameter ist die Distanz von Testabschnitt zu Fotodetektor, weil die Signalbreite direkt proportional zu dieser Distanz ist. Ziel der Messungen war es, einen Überblick über die Verteilung des Lichtsignals von den bspw. mit einem Kapillardruckverfahren aufgedruckten Testabschnitten zu bekommen.

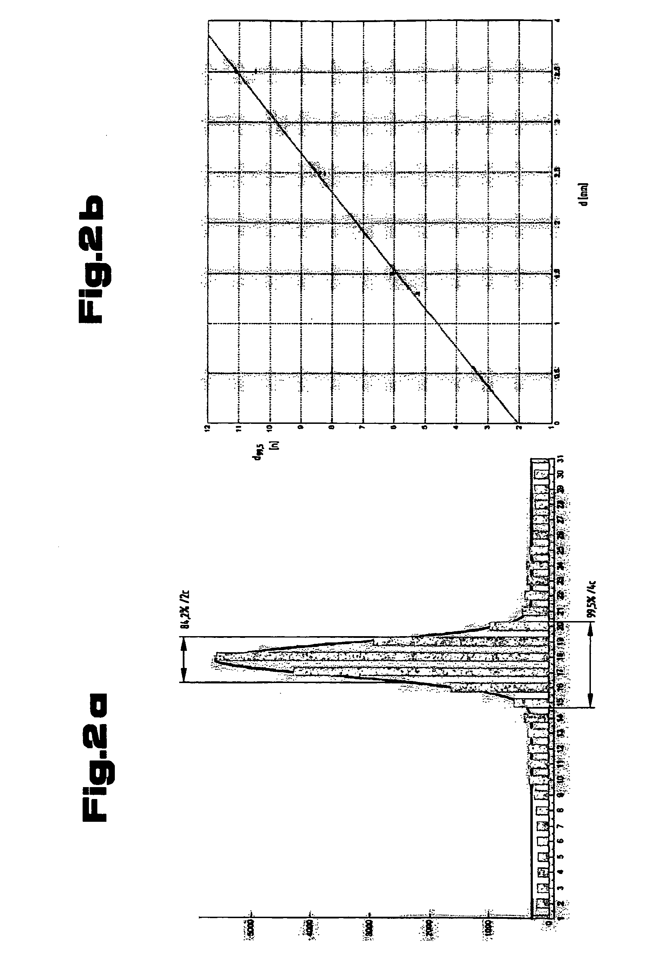

Aus der Messung ergab sich eine Gaußverteilung des Signals auf dem fotosensitiven Sensor. Eine charakteristische Größe für eine Gaußkurve ist die 1/e Breite, die hier mit c benannt ist. Für derartige Signale befinden sich innerhalb von einer Breite von 2*c 84.2% des Signals. Auf eine Breite auf dem fotosensitiven Sensor von 4*c verteilen sich 99.5% des Signals eines gedruckten Testabschnitts. Fig. 2a zeigt die typische Signalverteilung für eine nicht erfindungsgemäße Testkonfiguration eines Probenträgers mit einem gedruckten Testabschnitt (2x1mm) auf einer 190µm dicken Probenlage, über einem fotosensitiven Sensor, wobei der Abstand von Testabschnitt zu den Fotodetektoren 1.54 mm beträgt. Dabei befinden sich 99.5% des Signals innerhalb von 4*c = 6.03 pixel. Damit lässt sich abschätzen, dass in dieser Konfiguration maximal 4-5 verschiedene Streifen mit annehmbarem Übersprechen und dynamischen Bereich detektieren werden können.

Messungen mit einem Abstand von 1.3, 1.5, 2.5 und 3.5 mm zwischen Testabschnitt und Fotodetektor wurden durchgeführt. Trägt man die durchschnittliche (3 Messwerte) Breite des detektierten Signals (99.5% also 4*c) auf dem fotosensitiven Sensor gegen die Distanz zwischen Testabschnitt und Sensor auf, erhält man die in Fig. 2b dargestellte Abhängigkeit. Detektiert man also das Helligkeitssignal eines 1mm breiten Testabschnitts in einem Abstand von 1.5mm (0.19mm Folie + 1.35 mm Glas zu fotosensitiver Fläche (lt. Angaben des Sensorherstellers)) so sind 99.5% des Signals auf 6 Pixel verteilt. In diesem Fall müsste man die Testabschnitte mit zumindest 6 pixel = 6 mm Abstand aufdrucken. In der bevorzugten Kanalstruktur auf einem Standardlaborträger (1"/3") mit einer Kanallänge von 30mm ließen sich maximal 5 Streifen detektieren wenn zumindest ein dynamischer Bereich von 100 (also ein Übersprechen < 1%) abgedeckt werden soll.

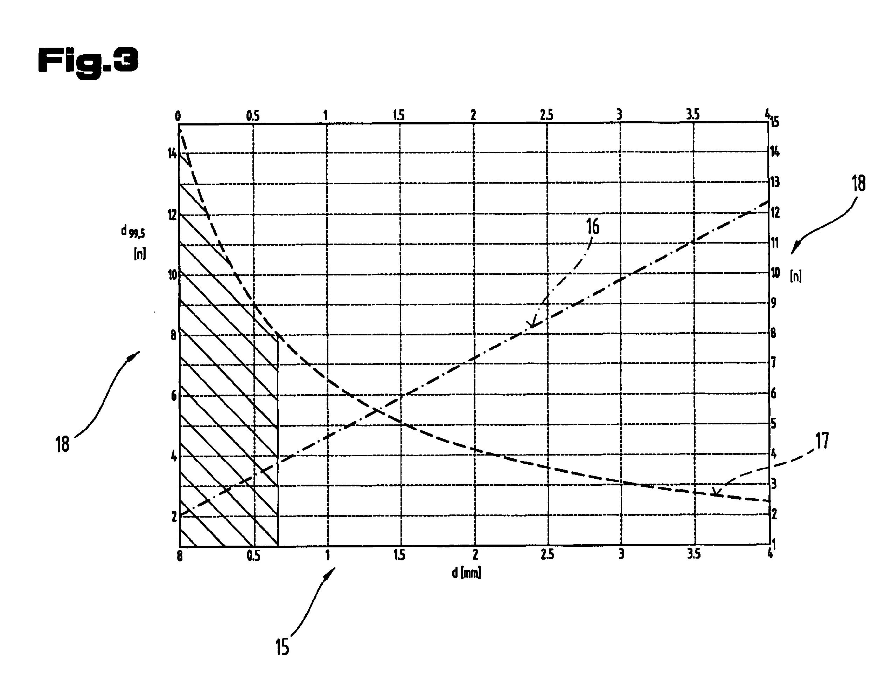

Mit diesem Verfahren lässt sich die mögliche Anzahl der detektierten Testabschnitte bestimmen, als Ergebnis dieser Untersuchungen erhält man die in Fig. 3 dargestellte Abhängigkeiten. Über der Distanz 15 zwischen dem Testabschnitt und dem Fotodetektor sind zwei Kurven aufgetragen, eine quasi lineare Kurve 16 und eine sich aus dieser Kurve ergebende, im Wesentlichen exponentiell verlaufende Kurve 17. Die quasi lineare Kurve 16 zeigt die Abhängigkeit, bei welchem Abstand 15 zwischen einem Testabschnitt und dem fotosensitiven Sensor, 99,5 % der Gesamtintensität des vom Testabschnitt ausgehenden Lichtes, auf welche Anzahl 18 von Fotodetektoren einfällt. Aus diesem Diagramm ist beispielsweise erkennbar, dass bei einer Distanz von 1 mm zwischen Testabschnitt und Fotodetektor, 99,5 % der Gesamtintensität auf beinahe 5 Fotodetektoren treffen. Dividiert man die Kanallänge (also 30mm) durch die ,99.5%' - Breite (in mm) des Helligkeitssignals eines einzelnen Testabschnitts, erhält man die zweite Kurve 17. Diese Kurve gibt nun an, wie viele Testabschnitte 18 bei welchem Abstand 15 zwischen Testabschnitt und Sensor maximal möglich sind.

Aufgrund der bevorzugten Kanallänge von 30 mm wurde das gewünschte Messergebnis dahingehend optimiert, dass zumindest acht Testabschnitte mit der erfindungsgemäßen Erfassungsvorrichtung erfasst und ausgewertet werden können. Die schraffierte Fläche zeigt an, unterhalb welcher Distanz von Testabschnitt zu Fotodetektor, mehr als 8 Streifen detektierbar sind. Aus dem Diagramm erhält man für acht Streifen, durch Analyse der Kurve 17, einen Wert von ca. 0,7 mm.

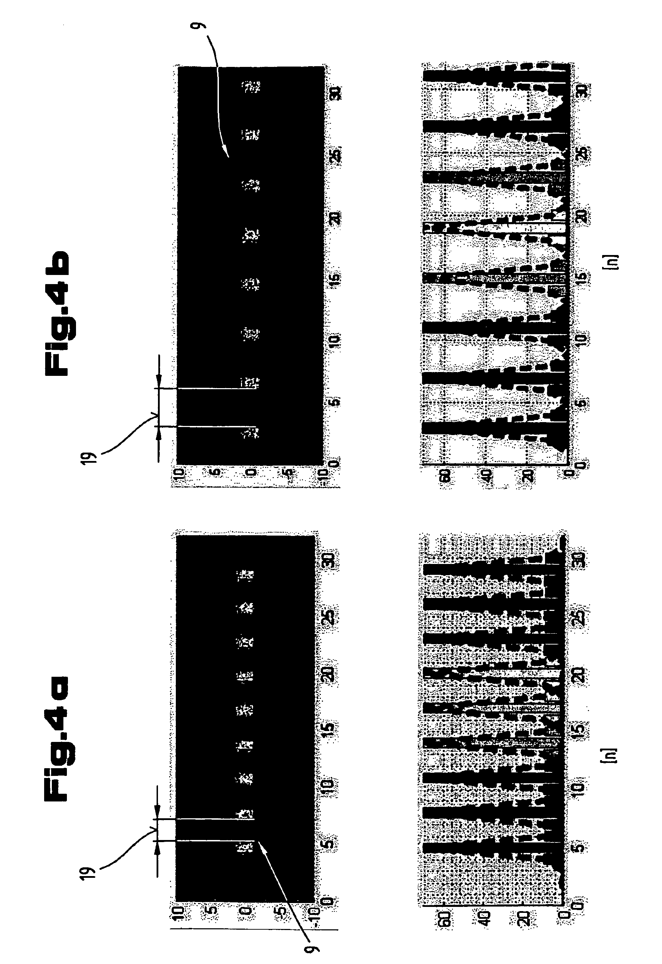

In der Fig. 4 ist das sogenannte Signalübersprechen dargestellt, also wie stark das Helligkeitssignal aufgrund seiner Intensitätsverteilung von einem Testabschnitt auf die benachbarten Fotodetektoren einwirkt. Insbesondere ist hier der Abstand 19 zwischen den Testabschnitten 9 von Bedeutung, denn je größer dieser Abstand 19 ist, desto weniger Signalanteile eines Testabschnitts werden in den Erfassungsbereich der jeweils benachbarten Testabschnitte und damit der zugeordneten Fotodetektoren fallen - unter Voraussetzung eines gleich gehaltenen Abstands zwischen Testabschnitt und Fotodetektor. In den Fig. 4a und 4b ist jeweils im unteren Diagramm die Situation dargestellt, bei der jeder Testabschnitt 9 ein maximales Helligkeitssignal abgibt, wobei die übliche Intensitätsverteilung des Helligkeitssignals strichliert dargestellt ist. In der Fig. 4a beträgt der Abstand 19 zwischen den einzelnen Testabschnitten 3 mm, in der Fig. 4b beträgt dieser Abstand 4 mm, sodass hier nur noch sehr geringe Anteile der Strahlungsintensität eines Testabschnitts auf benachbarte Testabschnitte einwirken. Ein geringes Übersprechen ist insbesondere dann von besonderer Bedeutung, wenn bei zwei benachbarten Testabschnitten sehr unterschiedliche Intensitätsreaktionen erfolgen, sodass die Helligkeitssignale sehr unterschiedlich sein werden. Der Grenzbereich ist dadurch gegeben, dass auf einem Testabschnitt die maximale Helligkeitsreaktion stattfindet, am benachbarten Testabschnitt die kleinstmöglich erfassbare Probenreaktion stattfindet. Durch die erfindungsgemäße Ausbildung mit einem Abstand kleiner 700µm zwischen Testabschnitt und Fotodetektor ist auch in diesem Fall gewährleistet, dass das Helligkeitsprodukt der intensiven Reaktion jenes der sehr schwachen Reaktion nicht überdeckt und somit eine eindeutige Trennung der beiden Reaktionsprodukte möglich ist.

Ein großer Abstand zwischen den Testabschnitten hat den weiteren Vorteil, dass dadurch auch Ungenauigkeiten die beim Aufbringen der Testabschnitte auf die Probenlage, beispielsweise beim Aufdrucken, sowie Ungenauigkeiten die sich aufgrund des Einlegens des Probenträgers in die Aufnahmevorrichtung ergeben, keinen oder einen nur sehr geringen Einfluss auf die Erfassungskennwerte, insbesondere auf das Signal-zu-Rauschverhältnis, auf den unteren Erfassungsgrenzwert sowie das Übersprechen bewirken. Insbesondere erhält man mit dieser Ausbildung beim ermittelten Konzentrationswert eine Standardabweichung von 1,5 %, wodurch der Konzentrationswert praktisch unabhängig von der Positioniergenauigkeit der Testabschnitte bzw. der Anordnung in der Aufnahmevorrichtung wird. Diese Ausbildung hat den besonderen Vorteil, dass somit auch eine Anwendung durch ungeschultes Personal möglich ist, da Ausrichtungsfehler das Messergebnis im Wesentlichen nicht beeinflussen werden.

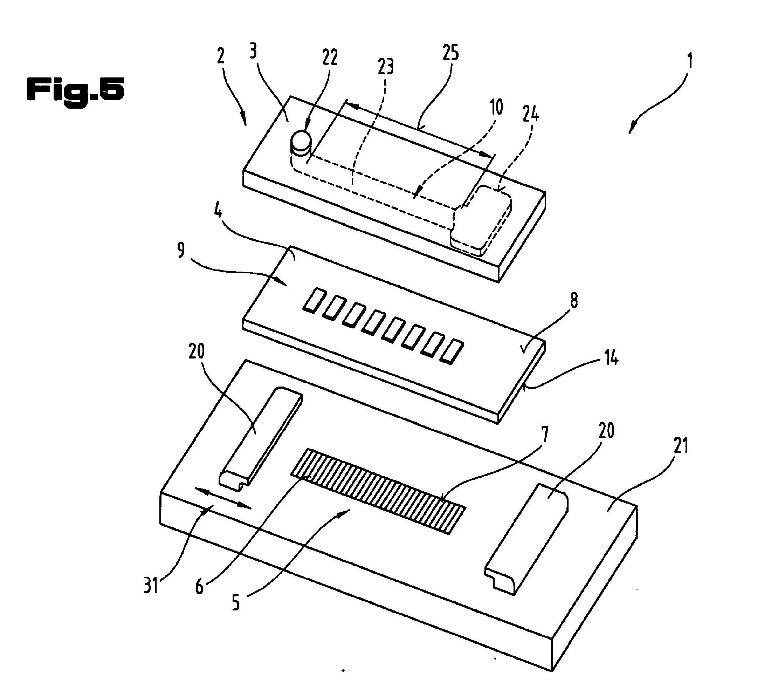

Fig. 5 zeigt eine Explosionsdarstellung der erfindungsgemäßen Messanordnung 1 umfassend den Probenträger 2 mit der Trägerlage 3 und der Probenlage 4. Der Probenträger 2 ist in einer Aufnahmevorrichtung 20 lösbar angeordnet, sodass die Lichtaustrittsseite 14 der Probenlage dem fotosensitiven Sensor 5 zugewandt angeordnet ist. Der fotosensitive Sensor 5 ist wiederum in einem Grundkörper 21 angeordnet, wobei die einzelnen Fotodetektoren 6 von einer transparenten Deckschicht 7 abgedeckt sind. Auf der Analyseseite 8 der Probenlage 4 ist eine Mehrzahl von Testabschnitten 9 angeordnet. Die Probenlage 4 ist wiederum auf der Trägerlage angeordnet, sodass die Testabschnitte 9 einem Volumen der Mikrofluidik 10 zugewandt sind, wodurch es bei Abgabe einer zu analysierenden Probe am Abgabeabschnitt 22, aufgrund der geometrischen Charakteristik des Kanals 23, zu einer kapillaren Bewegung des Analyts vom Abgabeabschnitt 22 durch den Kanal 23 zu einem Reservoir 24, kommt. Dadurch kommt es auch zu einem Kontakt des Analyts mit den Testabschnitten 9, wodurch es im jeweiligen Testabschnitt, bei Vorhandensein eines entsprechenden Analyts in der Probe, zu einer chemischen Bindungsreaktion kommen wird, was zu einer Veränderung der spektralen Eigenschaften bzw. zu einer chemilumineszenten Lichtabgabe führt. Mit einer Kanallänge 25 von 30 mm für einen Standard-1" / 3" Probenträger 2 wurde die erfindungsgemäße Messanordnung dahingehend optimiert, dass acht Testabschnitte 9 von insgesamt 32 einzelnen Fotodetektoren 6 des fotosensitiven Sensors 5 erfasst werden, sodass 99,5 % des einen Testabschnitt zugeordneten Helligkeitssignals von jeweils drei Fotodetektoren 6 erfasst wird.

Die Aufnahmevorrichtung 20 ist beispielsweise derart ausgebildet, dass der Probenträger 2 in einen feststehenden Teil der Aufnahmevorrichtung eingelegt wird und von einem zweiten, beweglichen und/oder klappbaren Teil der Aufnahmevorrichtung fixiert gehalten wird. Auch ist möglich, dass ein einem Teil der Aufnahmevorrichtung ein vorgespanntes Element angeordnet ist, welches beim Einlegen des Probenträgers komprimiert wird und so den Probenträger in der Aufnahmevorrichtung fixiert.

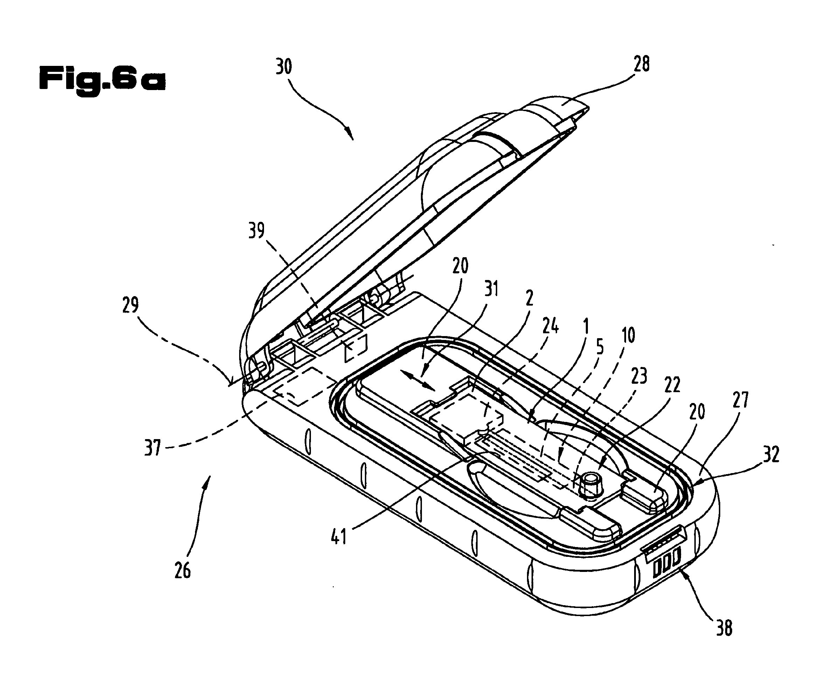

Fig. 6a zeigt ein erfindungsgemäßes Messgerät 26, umfassend eine Messanordnung 1 in einem Grundkörper 27, wobei eine Abdeckkappe 28 um eine Schwenkachse 29 zwischen einer Messposition und einer Zuführ- und Entnahmeposition 30 verschwenkbar angeordnet ist.

Der fotosensitive Sensor 5 der Messanordnung 1 ist bevorzugt im Grundkörper 27 angeordnet, bevorzugt derart, dass der Probenträger 2 in der Aufnahmevorrichtung 20 derart gehalten wird, dass die Testabschnitte entlang des Kanals 23 mit ihrer Lichtaustrittsseite über den Fotodetektoren des fotosensitiven Sensors 5 angeordnet sind. Die Aufnahmevorrichtung 20 kann dazu beispielsweise einen feststehenden und einen längsverschieblich beweglichen, federvorgespannten Halteteil aufweisen, sodass bei Einlegen des Probenträgers 2 der bewegliche Teil in einer Längsrichtung 31 bewegt werden kann, um das Einlegen des Probenträger zu erleichtern und diesen, nach zurückfedern in die Halteposition, entsprechend fixiert. Neben einer längsverschieblichen Ausbildung kann aber auch ein Klapp- bzw. Schnappmechanismus vorgesehen sein. Auch ist es möglich, dass zumindest in einem der Halteteile ein Druckmittel vorhanden ist, bspw. ein Gummi- oder Federelement, welches wie zuvor beschrieben den Probenträger nach dem Einlegen fixiert.

Wird die Abdeckkappe 28 in die Messposition verschwenkt, wird durch ein Dichtelement 32 der Innenraum, insbesondere der Probenträger 2 und der fotosensitive Sensor 5, gegenüber der Umgebung lichtdicht abgeschlossen. Das Dichtelement 32 kann beispielsweise durch eine Nut-Feder-Verbindung ausgebildet sein, im Grundkörper 27 kann dazu eine umlaufende nutförmige Vertiefung vorgesehen sein, in die eine entsprechend gegenüberliegende Feder der Abdeckkappe 28, bei verschwenken derselben in die Messposition, eingreift und den Innenraum lichtdicht abschließt. Das Dichtelement 32 kann aber auch durch ein elastisch verformbares Element gebildet sein, beispielsweise ein Schaummaterial oder eine Gummidichtung, wobei wiederum bei Schließen der Abdeckkappe 28 aufgrund einer dadurch hervorgerufenen Kompression des Dichtelements 32 ein lichtdichter Abschluss des Innenraums des Messgeräts gegenüber der Umgebung gegeben ist. Der Probenträger 2 weist einen Abgabeabschnitt 22 auf, in welchem die zu analysierende Probe abgegeben wird, die aufgrund der Dimensionierung des Kanals 23 der Mikrofluidik 10 selbsttätig vom Abgabeabschnitt 22 zum Reservoir 24 bewegt wird. Die Abgabe von Probenmaterial am Abgabeabschnitt 22 ist jedoch dahingehend problematisch, da einerseits die abzugebende Menge möglichst genau einzuhalten ist bzw. ist eine Reihenfolge der Abgabe der Probenchemie einzuhalten. Ferner kommt es nach Abgabe des Probenmaterials durch die Vorbeileitung desselben an den Testabschnitten zur Reaktion und damit zur Veränderung der optischen Eigenschaften bzw. zur Lichtabgabe in den Testabschnitten. Ist zu diesem Zeitpunkt die Abdeckkappe 28 noch nicht in der Messposition, kann dies zu Fehlmessungen führen.

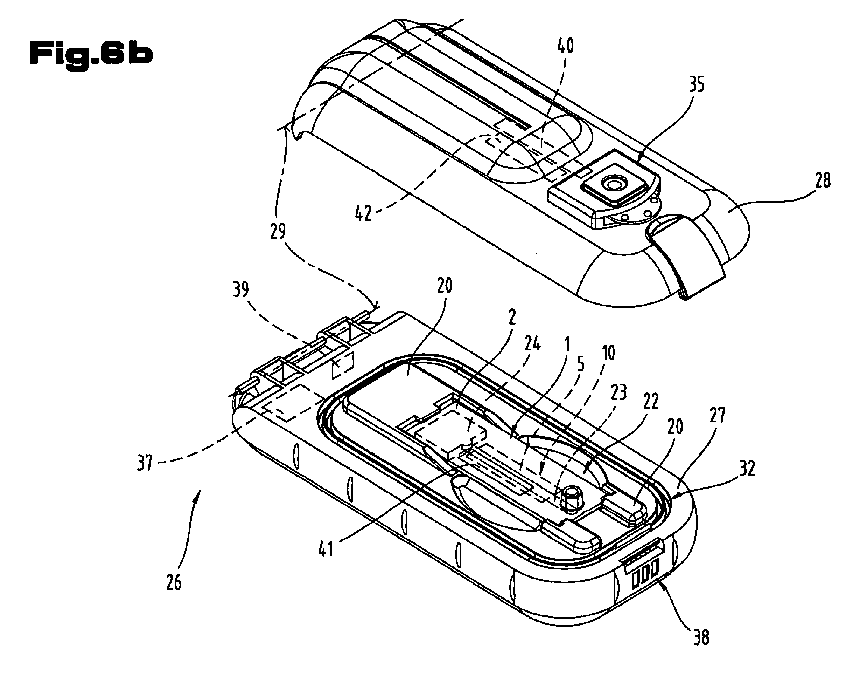

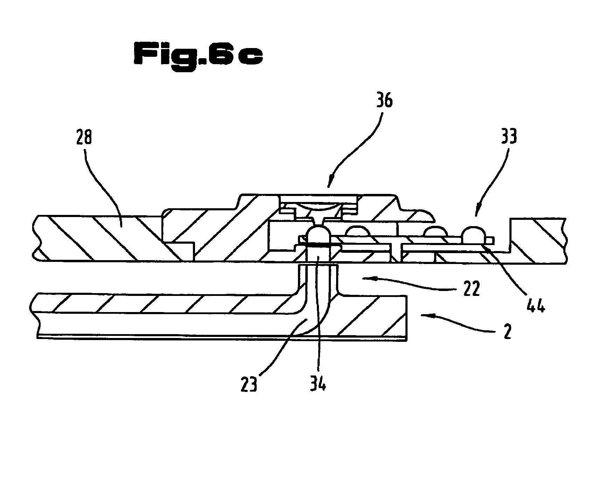

Fig. 6b und 6c zeigen eine weitere mögliche Ausbildung des erfindungsgemäßen Messgeräts, bei dem beispielsweise in der Abdeckkappe eine Zuführvorrichtung 34 vorgesehen sein kann, welche den Abgabeabschnitt 22 zur flüssigkeitsdichten Abgabe des Probenmaterials kontaktiert und ferner den lichtdichten Abschluss des Probenträgers 2 gegenüber der Umgebung gewährleistet. Somit kann der Probenträger in die Aufnahmevorrichtung 20 eingelegt werden und anschließend die Abdeckkappe 28 geschlossen werden, ohne dass sich in der Mikrofluidik 10 bereits Probenmaterial bzw. Probenchemie befindet, wodurch sichergestellt ist, dass keine chemische Reaktion in den Testabschnitten ausgelöst wird. Erst dann, bei geschlossener Abdeckkappe und sicherer Herstellung eines lichtdichten Abschlusses des Probenträgers, werden die Reagenzien bzw. die zu analysierende Probe an der Zuführvorrichtung abgegeben und von dieser an den Abgabeabschnitt 22 des Probenträgers 2 weitergeleitet. Da zur Durchführung der Probenanalyse zusätzlich weitere Reagenzien erforderlich sein können, kann das Messgerät 26 ferner eine Abgabevorrichtung 35 für Reagenzien aufweisen. Die Abgabevorrichtung 35 umfasst bevorzugt ein Betätigungselement 36 und koppelbar auswechselbares Depot 33, welches bspw. als Blister ausgebildet ist und mehrere abgeschlossene Behältnisse aufweist, in welchen Reagenzien angeordnet sind. Nach Betätigen eines Betätigungselements 36 wird im Fall eines Blisters als Depot 33, die Versiegelung 44 der Reagenzienkammer aufgebrochen und das Reagent über die Zuführvorrichtung 34 in den Abgabeabschnitt 22 übergeben und damit in die Mikrofluidik 10 übergeben.

Um eine Reihenfolge der Probenabgabe zu gewährleisten, können beispielsweise mehrere Betätigungselemente 36 vorhanden sein, die eine Ablaufkennung aufweisen, beispielsweise in Form einer Nummerierung bzw. durch eine farbliche Codierung, beispielsweise als eine Art Ampelsystem. Somit ist sichergestellt, dass die Probenabgabe bei geschlossener Abdeckkappe und damit lichtdicht abgeschlossenem Probenträger erfolgt und dass ferner die Reagenzien bzw. die zu analysierende Probe in der richtigen Reihenfolge, in der vorgegebenen Menge und insbesondere bei geschlossener Abdeckkappe abgegeben werden kann. Auch kann das Depot eine Aktivierungsrichtung vorgeben, bspw. in dem das Depot drehbar in der Abgabevorrichtung aufgenommen ist und nach jeder Reagenzabgabe manuell oder automatisch weitergedreht wird. Eine automatische Fortschaltung kann durch eine mechanische Verriegelung bzw. Schnappvorrichtung gebildet sein, welche in eine entsprechend gestaltete Gegenstelle des Depots eingreift. Eine Weiterbildung kann auch darin bestehen, dass das Steuerungsmodul eine Wirkverbindung mit den Betätigungselementen hat, und somit automatisch und in der korrekten Reihenfolge die Reagenzien abgibt. Dazu kann beispielsweise ferner ein Verriegelungselement 38 mit einer Kontaktgabevorrichtung ausgebildet sein, wodurch das Schließen der Abdeckkappe 28 den Messvorgang auslöst. Nach Ende der Messung kann beispielsweise vom Steuerungsmodul 37 das Verriegelungselement 38 angesteuert werden, sodass eine mechanische Rastvorrichtung deaktiviert wird und sich die Abdeckkappe 28 automatisch in die Zuführ- und Entnahmeposition 30 verschwenkt.

In einer vorteilhaften Weiterbildung kann die Zuführvorrichtung 34 auch Teil des Depots 33 sein, sodass im Sinne einer Einwegverwendung die Zuführvorrichtung 34 zusammen mit dem Depot 33 und den darin gehaltenen Reagenzien nach jedem Einsatz getauscht wird, sodass stets eine frische, saubere Zuführvorrichtung 34 für die Messung verwendet wird.

Das Steuerungsmodul 37 ist jedoch insbesondere dazu ausgebildet, die einzelnen Fotodetektoren des fotosensitiven Sensors 5 auszuwerten, insbesondere das dem einfallenden Helligkeitssignal proportionale elektrische Signal auszuwerten, entsprechend aufzubereiten und an einem Kommunikationsanschluss 39 bereitzustellen. Dieser Kommunikationsanschluss ist bevorzugt durch einen USB-Kommunikationsanschluss gebildet, wobei jedoch weitere, drahtgebundene bzw. drahtlose Kommunikationsverbindung aus dem Bereich der Datenübertragung möglich sind. Nicht abschließend seien beispielshaft genannt: RS-232, RS-435, Bluetooth, zigBEE, IRDA oder Firewire.

Neben chemilumineszenten Messungen, bei denen es aufgrund der chemischen Bindungsreaktion im Testabschnitt zu einer Lichtabgabe kommt, kann das erfindungsgemäße Messgerät 26 ferner auch Transmissionsmessungen durchführen, bei denen es im Testabschnitt aufgrund der chemischen Reaktion zu einer Änderung der Transmittanz kommt. Dazu weist die Abdeckkappe 28 eine Beleuchtungsvorrichtung 40 auf, welche bevorzugt vom Steuerungsmodul 37 angesteuert wird und ein Licht mit einer spezifischen Wellenlänge bzw. mit einer selektierbar oder durchstimmbaren Wellenlänge in Richtung des Probenträgers 2 abgibt. Das Licht durchdringt die Testabschnitte und wird dort entsprechend der chemischen Reaktion unterschiedlich stark gedämpft, was als zeitlicher Verlauf des erfassten Helligkeitssignals ausgewertet werden kann.

Die Beleuchtungsvorrichtung 40 kann ferner zusätzlich auch zur Kalibrierung des fotosensitiven Sensors 5 dienen, in dem vor Durchführung der Messung der fotosensitive Sensor beleuchtet wird und der erfasste initiale Helligkeitswert als Kalibrierungs- bzw. Nullpunktwert hinterlegt wird. Somit lassen sich fertigungsbedingte Unregelmäßigkeiten bzw. eine Verschmutzung der einzelnen Fotodetektoren des fotosensitiven Sensors ausgleichen, was insbesondere bei der Erfassung von Reaktionen auf mehreren Testabschnitten dann von Vorteil ist, wenn die einzelnen Reaktionen sehr unterschiedlich stark ausfallen, sodass gegebenenfalls vorhandene Abweichungen einen relevanten Teil des Messergebnisses ausmachen und somit das Messergebnis deutlich verfälscht werden würde.

Des Weiteren kann am Probenträger ein Identifikationsmerkmal 41 angeordnet sein, welches beispielsweise als eindeutige Seriennummer bzw. Typinformation in Form eines 1- bzw. 2-D-Codes aufgebracht ist. Das Identifikationsmerkmal 41 kann ferner einen Datenspeicher aufweisen, bspw. in Form eines Data-Matrix-Codes, indem beispielsweise Kalibrierungsdaten der einzelnen Testabschnitte bzw. analyserelevante Kennwerte hinterlegt sind. Das Identifikationsmerkmal 41 wird von einer Auslesevorrichtung 42 des Messgeräts 26 ausgelesen, wobei die Auslesevorrichtung 42 bevorzugt mit dem Steuerungsmodul 37 kommuniziert, welches die Kalibrations- bzw. Identifikationsdaten übernimmt, das Messgerät entsprechend parametriert und die Messung durchführt.

Zur Sicherstellung einer Wiederholgenauigkeit bzw. um produktionsbedingte Abweichungen ausgleichen zu können ist es von Vorteil, dass vor Abgabe der Probe auf dem Probenträger die Beleuchtungsvorrichtung aktiviert wird und eine Kalibrierung des fotosensitiven Sensors durchgeführt wird. Durch aktivieren der Beleuchtungsvorrichtung werden alle Fotodetektoren des Sensors mit einem gleichmäßigen Helligkeitssignal, bzw. mit einer bekannten Helligkeitsverteilung beaufschlagt, sodass Abweichungen von der gewünschten Helligkeitsverteilung als Störsignal interpretiert und das erfasste Helligkeitssignal entsprechend korrigiert werden kann. Insbesondere kann es bei der Herstellung der Testabschnitte zu geringfügigen Abweichungen in der Reaktionsfreudigkeit der aufgebrachten Probenchemie kommen, bzw. können die einzelnen Fotodetektoren des Sensors geringfügige Sensitivitätsunterschiede aufweisen. Auch kann es durch die Anordnung des Probeträger im Aufnahmeabschnitt zu einer geringen Fehlausrichtung bzw. zu einer Verschmutzung kommen, wodurch ein systematischer Fehler entsteht, der ohne Korrektur bzw. Kalibrierung, die ermittelten Konzentrationswerte deutlich verfälschen kann. Diese Kalibrierung kann nur für die Fotodetektoren alleine durchgeführt werden, also bei geschlossener Abdeckkappe, ohne eingelegten Probenträger, es ist aber auch eine Kalibrierung des gesamten Systems möglich, also wenn der Probenträger eingelegt ist, aber noch keine Probe bzw. Reagenz aufgebracht wurde.

Die Ausführungsbeispiele zeigen mögliche Ausführungsvarianten der Messanordnung und des Messgeräts, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Der Schutzumfang wird durch die Ansprüche definiert.

In den Fig. 6b und 6c ist eine weitere und gegebenenfalls für sich eigenständige Ausführungsform des Messgeräts gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figurenhingewiesen bzw. Bezug genommen.

Der Ordnung halber sei abschließend darauf hingewiesen, dass zum besseren Verständnis des Aufbaus der Messanordnung bzw. des Messgeräts diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | | | |
|---|---|---|---|
| 1 | Messanordnung | 41 | Identifikationsmerkmal |
| 2 | Probenträger | 42 | Auslesevorrichtung |
| 3 | Trägerlage | 43 | Begrenzungsfläche |
| 4 | Probenlage | 44 | Versiegelung |
| 5 | Fotosensitiver Sensor | | |
| | | | |
| 6 | Fotodetektor | | |
| 7 | Deckschicht | | |
| 8 | Analyseschicht | | |
| 9 | Testabschnitt | | |
| 10 | Mikrofluidik | | |
| | | | |
| 11 | Abstand | | |
| 12 | Dicke | | |
| 13 | Dicke | | |
| 14 | Lichtaustrittsseite | | |
| 15 | Distanz | | |
| | | | |
| 16 | Kurvenverlauf | | |
| 17 | Kurvenverlauf | | |
| 18 | Anzahl der Probenabschnitte | | |
| 19 | Abstand | | |
| 20 | Aufnahmevorrichtung | | |
| | | | |
| 21 | Grundkörper | | |
| 22 | Abgabeabschnitt | | |
| 23 | Kanal | | |
| 24 | Reservoir | | |
| 25 | Länge | | |
| | | | |
| 26 | Messgerät | | |
| 27 | Grundkörper | | |
| 28 | Abdeckkappe | | |
| 29 | Schwenkachse | | |
| 30 | Zuführ- und Entnahmeposition | | |
| | | | |
| 31 | Längsrichtung | | |
| 32 | Dichtelement | | |
| 33 | Depot | | |
| 34 | Zuführvorrichtung | | |
| 35 | Abgabevorrichtung für Reagenzien | | |
| | | | |
| 36 | Betätigungselemente | | |
| 37 | Steuerungsmodul | | |
| 38 | Verriegelungselement | | |
| 39 | Kommunikationsschnittstelle | | |
| 40 | Beleuchtungsvorrichtung | | |

## Patentansprüche

1. Messanordnung (1) zur quantitativen optischen Auswertung einer chemischen Reaktion, umfassend einen Probenträger (2) mit einer Trägerlage (3) und einer Probenlage (4), einen fotosensitiven Sensor (5) mit einer Mehrzahl von Fotodetektoren (6) auf einem Tragkörper und mit einer über den Fotodetektoren (6) angeordneten transparenten Deckschicht (7), wobei die Trägerlage (3) einen Abgabeabschnitt (22), eine Mikrofluidik (10) und ein Reservoir (24) aufweist, wobei der Abgabeabschnitt (22) über die Mikrofluidik (10) mit dem Reservoir (24) verbunden ist, und wobei die Mikrofluidik (10) einen Kanal (23) umfasst und wobei die Probenlage (4) eine Analyseseite (8) und dieser gegenüber liegend eine Lichtaustrittsseite (14) aufweist, wobei auf der Analyseseite (8) in einer Längsrichtung der Probenlage (2) voneinander beabstandet, eine Mehrzahl von Testabschnitten (9) angeordnet sind und wobei die Probenlage (4) mit der Analyseseite (8) derart auf der Trägerlage (3) angeordnet ist, dass die Testabschnitte (9) einem Volumen der Mikrofluidik (10) zugewandt sind und wobei der Probenträger (2) in einer Aufnahmevorrichtung (20) lösbar angeordnet ist, so dass die Lichtaustrittsseite (14) dem fotosensitiven Sensor (5) zugewandt und die Testabschnitte (9) über den Fotodetektoren (6) angeordnet sind, wobei der Abstand (11) zwischen den Testabschnitten (9) und den Fotodetektoren (6) kleiner als 700µm ist und zumindest 99,5 % der von einem Testabschnitt (9) ausgehenden und auf den fotosensitiven Sensor (5) auftreffenden elektromagnetischen Strahlung auf maximal drei Fotodetektoren (6) einfallen.

2. Messanordnung nach Anspruch 1, **dadurch gekennzeichnet, dass** die Dicke (12) der Deckschicht (7) kleiner 500 µm beträgt.

3. Messanordnung nach einem der Ansprüche 1 oder 2, **dadurch gekennzeichnet, dass** die Dicke (13) der Probenlage (4) kleiner 200 µm beträgt.

4. Messanordnung nach einem der Ansprüche 1 bis 3, **dadurch gekennzeichnet, dass** der Zwischenraum zwischen zwei benachbarten Fotodetektoren (6) kleiner als 150 µm ist.

5. Messanordnung nach einem der Ansprüche 1 bis 4, **dadurch gekennzeichnet, dass** der über dem Fotodetektor (5) angeordnete Kanal (23) der Mikrofluidik (10) eine Länge von 30 - 50mm, eine Breite von 1 - 4mm und eine Höhe von 10-200µm aufweist.

6. Messanordnung nach einem der Ansprüche 1 bis 5, **dadurch gekennzeichnet, dass** sich bei Abgabe einer Probe am Abgabeabschnitt (22) im Kanal (23) ein Druckgradient mit einer daraus resultierenden Kapillarkraft in Richtung des Reservoirs (24) bildet.

7. Messanordnung nach einem der Ansprüche 1 bis 6, **dadurch gekennzeichnet, dass** der Mittenabstand zwischen zwei benachbarten Testabschnitten (9) größer oder gleich dem 3-fachen Mittenabstand der Fotodetektoren (6) ist.

8. Messanordnung nach einem der Ansprüche 1 bis 7, **dadurch gekennzeichnet, dass** die, dem fotosensitiven Sensor (5) gegenüberliegend angeordnete Begrenzungsfläche (43) des Kanals (23), optisch reflektierend ausgebildet ist und/oder dass die Trägerlage (3) optisch reflektierend ausgebildet ist.

9. Messanordnung nach einem der Ansprüche 1 bis 8, **dadurch gekennzeichnet, dass** der Kanal (23) einen zum fotosensitiven Sensor (5) ausgerichteten konkaven Querschnitt aufweist bzw. der Kanal (23) in Längserstreckung abschnittsweise konkav ausgebildet ist.

10. Messanordnung nach einem der Ansprüche 1 bis 9, **dadurch gekennzeichnet, dass** die Lichtaustrittsseite (14) zumindest abschnittsweise eine Lichtlenkstruktur aufweist.

11. Messanordnung nach einem der Ansprüche 1 bis 10, **dadurch gekennzeichnet, dass** die Probenlage (4) in Richtung ihrer Dicke zumindest abschnittsweise ein Brechungsindex-Stufenprofil, oder ein Brechungsindex-Gradientenprofil aufweist.

12. Messanordnung nach einem der Ansprüche 1 bis 11, **dadurch gekennzeichnet, dass** auf der Lichtaustrittsseite (14) oder auf der Deckschicht (7) eine Immersionsschicht aufgebracht ist.

13. Messanordnung nach einem der Ansprüche 1 bis 12, **dadurch gekennzeichnet, dass** am Probenträger (2) ein Identitäts- bzw. Identifikationsmerkmal (41) angeordnet ist.

14. Messanordnung nach einem der Ansprüche 1 bis 13, **dadurch gekennzeichnet, dass** die Probenlage (4) und/oder die Trägerlage (3) als optischer Polarisator ausgebildet ist.

15. Messgerät (26) zur optischen Auswertung einer chemischen Reaktion umfassend eine Messanordnung (1) nach einem der Ansprüche 1 bis 14 mit einem fotosensitiven Sensor (5) und einem Probenträger (2), einen Grundkörper (27), eine, um eine Schwenkachse (29) zwischen einer Messposition und einer Zuführ- und Entnahmeposition (30) verschwenkbare Abdeckkappe (28), ferner ein Steuerungsmodul (37) zur Aufbereitung der vom Sensor (5) erfassten Helligkeitsinformation, wobei der fotosensitive Sensor (5) im Grundkörper (27) angeordnet ist und wobei die Abdeckkappe (28) in der Messposition den Probenträger (2) und einen Abschnitt des Grundkörpers (27) lichtdicht gegen die Umgebung abschließt.

16. Messgerät nach Anspruch 15, **dadurch gekennzeichnet, dass** in der Abdeckkappe (28) eine Beleuchtungsvorrichtung (40) vorhanden ist.

17. Messgerät nach Anspruch 16, **dadurch gekennzeichnet, dass** die Beleuchtungsvorrichtung (49) selektiv steuerbar, Licht in mehreren Wellenlängen und/oder an verschiedenen Positionen abgibt.

18. Messgerät nach einem der Ansprüche 16 oder 17, **dadurch gekennzeichnet, dass** die Beleuchtungsvorrichtung (49) einen Polarisator aufweist.

19. Messgerät nach einem der Ansprüche 15 bis 18, **dadurch gekennzeichnet, dass** in der Abdeckkappe (28) oder im Grundkörper (27) eine Abgabevorrichtung (35) für Reagenzien angeordnet ist.

20. Messgerät nach Anspruch 19, **dadurch gekennzeichnet, dass** die Abgabevorrichtung (35) ein Betätigungselement (36) und ein Depot (33) für Reagenzien aufweist.

21. Messgerät nach einem der Ansprüche 15 bis 20, **dadurch gekennzeichnet, dass** die Abdeckkappe (28) einen Zuführabschnitt (34) aufweist, welcher den Abgabeabschnitt (22) des Probenträger (2) kontaktiert.

## Claims

1. A measuring arrangement (1) for optically evaluating a chemical reaction quantitatively, comprising a sample carrier (2) having a carrier layer (3) and a sample layer (4), a photosensitive sensor (5) with a plurality of photodetectors (6) on a carrier body and a transparent cover layer (7) arranged over the photodetectors (6), the carrier layer (3) comprising a delivery section (22), a microfluidic system (10) and a reservoir (24), the delivery section (22) being connected via a microfluidic system (10) to the reservoir (24), and the microfluidic system (10) comprising a channel (23), and the sample layer (4) having an analysis side (8) and opposite the latter a light outlet side (14), on the analysis side (8) spaced apart from one another in longitudinal direction of the sample layer (2) a plurality of test sections (9) are arranged and the sample layer (4) is arranged with the analysis side (8) on the carrier layer (3) such that the test sections (9) face a volume of the microfluidic system (10), and the sample carrier (2) is arranged detachably in a mounting device (20), so that the light outlet side (14) faces the photosensitive sensor (5), and the test sections (9) are arranged above the photodetectors (6), and the distance (11) between the test sections (9) and the photodetectors (6) is less than 700 µm and at least 99.5% of the electromagnetic radiation coming from a test section (9) and reaching the photosensitive sensor (5) is incidental on a maximum of three photodetectors (6).

2. Measuring arrangement according to claim 1, **characterized in that** the thickness (12) of the cover layer (7) is less than 500 µm.

3. Measuring arrangement according to one of claims 1 or 2, **characterized in that** the thickness (13) of the sample layer (4) is less than 200 µm.

4. Measuring arrangement according to one of claims 1 to 3, **characterized in that** the space between two adjacent photodetectors (6) is less than 150 µm.

5. Measuring arrangement according to one of claims 1 to 4, **characterized in that** the channel (23) of the microfluidic system (10) arranged above the photodetector (5) has a length of 30 - 50 mm, a width of 1 - 4 mm and a height of 10 - 200 µm.

6. Measuring arrangement according to one of claims 1 to 5, **characterized in that** when depositing a sample on the delivery section (22) in the channel (23) a pressure gradient is formed with a resulting capillary force in the direction of the reservoir (24).

7. Measuring arrangement according to one of claims 1 to 6, **characterized in that** the center-to-center distance between two adjacent test sections (9) is greater than or equal to 3-times the center-to-center distance of the photodetectors (6).

8. Measuring arrangement according to one of claims 1 to 7, **characterized in that** the boundary surface (43) of the channel (23) arranged opposite the photosensitive sensor (5) is configured to be optically reflective and/or the carrier layer (3) is designed to be optically reflective.

9. Measuring arrangement according to one of claims 1 to 8, **characterized in that** the channel (23) has a concave cross section relative to the photosensitive sensor (5) or the channel (23) is designed to be concave in some sections in longitudinal extension.

10. Measuring arrangement according to one of claims 1 to 9, **characterized in that** the light outlet side (14) has a light deflecting structure at least in some sections.

11. Measuring arrangement according to one of claims 1 to 10, **characterized in that** the sample layer (4) in the direction of its thickness has a refractive index stepped profile at least in some sections or a refractive index gradient profile at least in some sections.

12. Measuring arrangement according to one of claims 1 to 11, **characterized in that** an immersion layer is applied onto the light outlet side (14) or the cover layer (7).

13. Measuring arrangement according to one of claims 1 to 12, **characterized in that** an identity or identification mark (41) is arranged on the sample carrier (2).

14. Measuring arrangement according to one of claims 1 to 13, **characterized in that** the sample layer (4) and/or the carrier layer (3) is configured as an optical polarizer.

15. Measuring device (26) for the optical evaluation of a chemical reaction comprising a measuring arrangement (1) which is configured according to one of claims 1 to 14, with a photosensitive sensor (5) and a sample carrier (2), a base body (27), a cover cap (28) pivotable about a pivot axis (29) between a measuring position and a supply and removal position (30), furthermore a control module (37) for processing the brightness information determined by the sensor (5), the photosensitive sensor (5) is arranged in the base body (27), and the cover cap (28) in the measuring position closes the sample carrier (2) and a section of the base body (27) so as to be light-proof from the environment.

16. Measuring device according to claim 15, **characterized in that** a lighting device (40) is provided in the cover cap (28).

17. Measuring device according to claim 16, **characterized in that** the lighting device (49) in a selectively controllable manner emits light in a plurality of wavelengths and/or to different positions.

18. Measuring device according to one of claims 16 or 17, **characterized in that** the lighting device (49) comprises a polarizer.

19. Measuring device according to one of claims 15 or 18, **characterized in that** a discharge device (35) for reagents is arranged in the cover cap (28) or in the base body (27).

20. Measuring device according to claim 19, **characterized in that** the discharge device (35) comprises an activating element (36) and a depot (33) for reagents.

21. Measuring device according to one of claims 15 or 20, **characterized in that** the cover cap (28) comprises a supply section (34), which contacts the delivery section (22) of the sample carrier (2).

## Revendications

1. Dispositif de mesure (1) pour l'analyse optique quantitative d'une réaction chimique, comprenant un support d'échantillon (2) avec une couche de support (3) et une couche d'échantillon (4), un capteur photosensible (5) avec une pluralité de photo-détecteurs (6) sur un élément de support et avec une couche de recouvrement (7) transparente disposée sur les photo-détecteurs (6), la couche de support (3) comprenant une portion de distribution (22), un système micro-fluidique (10) et un réservoir (24), la portion de distribution (22) étant relié, par l'intermédiaire du système micro-fluidique (10), au réservoir (24) et le système micro-fluidique (10) comprenant un canal (23) et la couche d'échantillon (4) comprenant un côté d'analyse (8) et un côté de sortie de la lumière (14) opposé au côté d'analyse, moyennant quoi, sur le côté d'analyse (8), sont disposés plusieurs portions de test (9) écartés les unes des autres dans une direction longitudinale de la couche d'échantillon (2) et la couche d'échantillon (4) étant disposée avec le côté d'analyse (8) sur la couche de support (3) de façon à ce que les portions de test (9) soient orientés vers un volume du système micro-fluidique (10) et le support d'échantillon (2) étant disposé de manière amovible dans un dispositif de logement (20), de façon à ce que le côté de sortie de la lumière (14) soit orienté vers le capteur photosensible (5) et les portions de test (9) soient disposées au-dessus des photo-détecteurs (6), la distance (11) entre les portions de test (9) et les photo-détecteurs (6) étant inférieure à 700 µm et au moins 99,5% du rayonnement électromagnétique sortant d'une portion de test (9) et arrivant sur le capteur photosensible (5) tombant sur maximum trois photo-détecteurs (6).

2. Dispositif de mesure selon la revendication 1, **caractérisé en ce que** l'épaisseur (12) de la couche de recouvrement (7) est inférieure à 500 µm.

3. Dispositif de mesure selon l'une des revendications 1 ou 2, **caractérisé en ce que** l'épaisseur (13) de la couche d'échantillon (4) est inférieure à 200 µm.

4. Dispositif de mesure selon l'une des revendications 1 à 3, **caractérisé en ce que** l'espace entre deux photo-détecteurs adjacents (6) est inférieur à 150 µm.

5. Dispositif de mesure selon l'une des revendications 1 à 4, **caractérisé en ce que** le canal (23) du système micro-fluidique (10), disposé au-dessus du photo-détecteur (5) présente une longueur de 30 à 50 mm, une largeur de 1 à 4 mm et une hauteur de 10 à 200 µm.

6. Dispositif de mesure selon l'une des revendications 1 à 5, **caractérisé en ce que**, lors de la distribution d'un échantillon sur la portion de distribution (22) dans le canal (23), un gradient de pression se forme, avec une force capillaire qui en résulte en direction du réservoir (24).

7. Dispositif de mesure selon l'une des revendications 1 à 6, **caractérisé en ce que** la distance entre deux portions de test (9) adjacentes est supérieure ou égale à 3 fois la distance entre les photo-détecteurs (6).

8. Dispositif de mesure selon l'une des revendications 1 à 7, **caractérisé en ce que** la surface de délimitation (43) du canal (23), disposée en face du capteur photosensible (5), présente une réflexion optique et/ou **en ce que** la couche de support (3) présente une réflexion optique.

9. Dispositif de mesure selon l'une des revendications 1 à 8, **caractérisé en ce que** le canal (23) comprend une section transversale concave orientée vers le capteur photosensible (5) ou bien le canal (23) est de forme concave par portions dans l'extension longitudinale.

10. Dispositif de mesure selon l'une des revendications 1 à 9, **caractérisé en ce que** le côté de sortie de la lumière (14) présente, au moins au niveau de certaines portions, une structure permettant le guidage de la lumière.

11. Dispositif de mesure selon l'une des revendications 1 à 10, **caractérisé en ce que** la couche d'échantillon (4) comprend, dans la direction de son épaisseur, au moins au niveau de certaines portions, un profil échelonné d'indices de réfraction ou un profil graduel d'indices de réfraction.

12. Dispositif de mesure selon l'une des revendications 1 à 11, **caractérisé en ce que**, sur le côté de sortie de la lumière (14) ou sur la couche de recouvrement (7), est appliquée une couche d'immersion.

13. Dispositif de mesure selon l'une des revendications 1 à 12, **caractérisé en ce que**, sur le support d'échantillon (2) se trouve une caractéristique d'identité ou d'identification (41).

14. Dispositif de mesure selon l'une des revendications 1 à 13, **caractérisé en ce que** la couche d'échantillon (4) et/ou la couche de support (3) forment un polarisateur optique.

15. Appareil de mesure (26) pour l'analyse optique d'une réaction chimique comprenant un dispositif de mesure (1) selon l'une des revendications 1 à 14, avec un capteur photosensible (5) et un support d'échantillon (2), un corps de base (27), un opercule (28) pivotant autour d'un axe de pivotement (29) entre une position de mesure et une position d'alimentation et de prélèvement (30), ainsi qu'un module de commande (37) pour le traitement des informations concernant la luminosité relevées par le capteur (5), le capteur photosensible (5) étant disposé dans le corps de base (27) et l'opercule (28) fermant, dans la position de mesure, le support d'échantillon (2) et une portion du corps de base (27) de manière étanche à la lumière.

16. Appareil de mesure selon la revendication 15, **caractérisé en ce que** dans l'opercule (28) se trouve un dispositif d'éclairage (40).

17. Appareil de mesure selon la revendication 16, **caractérisé en ce que** le dispositif d'éclairage (49) produit sélectivement une lumière de plusieurs longueurs d'ondes et/ou à différentes positions.

18. Appareil de mesure selon l'une des revendications 16 ou 17, **caractérisé en ce que** le dispositif d'éclairage (49) comprend un polarisateur.

19. Appareil de mesure selon l'une des revendications 15 à 18, **caractérisé en ce que** dans l'opercule (28) ou dans le corps de base (27) se trouve un dispositif de distribution (35) pour les réactifs.

20. Appareil de mesure selon la revendication 19, **caractérisé en ce que** le dispositif de distribution (35) comprend un élément d'actionnement (36) et un dépôt (33) pour les réactifs.

21. Appareil de mesure selon l'une des revendications 15 à 20, **caractérisé en ce que** l'opercule (28) comprend une portion d'alimentation (34) qui entre en contact avec la portion de distribution (22) du support d'échantillon (2).
